# EUROPEAN PATENT SPECIFICATION

(11) **EP 1 883 537 B1**
(45) Date of publication and mention of the grant of the patent: **13.03.2013**
(21) Application number: 06756654.7
(22) Date of filing: 22.05.2006
(51) Int. Cl.: G06K 15/10, B41J 2/045

(54) **IMAGE PROCESSING METHOD, PROGRAM THEREOF, AND IMAGE FORMING APPARATUS**
BILDERZEUGUNGSVERFAHREN, PROGRAMM DAFÜR UND BILDERZEUGUNGSVORRICHTUNG
METHODE DE TRAITEMENT D'IMAGE, PROGRAMME POUR CELLE-CI ET APPAREIL DE FORMATION D'IMAGE

(30) Priority: 24.05.2005 JP 2005150882
(43) Date of publication of application: 06.02.2008
(73) Proprietor: Ricoh Company, Ltd., Tokyo 143-8555 (JP)
(72) Inventor: KIMURA, Takashi, Kawasaki-shi, Kanagawa; 2150003 (JP)
(74) Representative: Leeming, John Gerard
(86) International application number: PCT/JP2006/310606
(87) International publication number: WO 2006/126697

(56) References cited:
- WO-A1-2004/000563
- JP-A- 2003 175 603
- JP-A- 2004 017 552
- US-A- 5 675 365

## Description

### TECHNICAL FIELD

The present invention generally relates to an image processing method, a program thereof, and an image forming apparatus.

### BACKGROUND ART

As an image forming apparatus such as a printer, a facsimile, a duplicating apparatus, a plotter, and a multifunctional apparatus combining the printer, the facsimile, and the duplicating apparatus, there is an inkjet recording apparatus. The inkjet recording apparatus includes an image forming unit which ejects ink droplets of recording liquid and can form an image on a recording medium such as a paper by ejecting the ink droplets from the image forming unit on the recording medium. In this, the image forming signifies image printing, image recording, letter printing, and image transferring.

Of such image forming apparatuses, there are a serial type image forming apparatus and a line type image forming apparatus. The serial type image forming apparatus forms one line of an image by moving a recording head in the width direction of a recording medium (main scanning direction) once or several times and forms a next line of an image by carrying the recording medium in the recording medium carrying direction (sub scanning direction). The line type image forming apparatus includes a line type recording head whose ink droplet ejecting nozzles are disposed in almost all width direction regions of a recording medium and forms an image on the recording medium by carrying the recording medium without moving the recording head in the width direction of the recording medium.

In the case of the serial type image forming apparatus, the recording speed is determined by resolution of an image to be formed, nozzle density, a driving frequency which forms dots, a sub scanning direction speed, and so on. In this case, in order to make the recording speed high, it is preferable that the recording head be moved once to form one line of an image. For example, when an image whose resolution in the sub scanning direction is 300 dpi is formed by using a recording head whose nozzle density is 300 dpi, one line of the image can be formed by moving the recording head once. However, when an image whose resolution in the sub scanning direction is 600 dpi is formed, an interlaced system, in which the recording head is moved twice in the main scanning direction and the recording medium is carried once in the sub scanning direction, must be executed. Therefore, the recording speed is naturally higher in a non-interlaced system in which the recording head is moved once in the main scanning direction than in the interlaced system. In addition, as methods to form an image of one line in the main scanning direction, there are a one-path recording system which forms an image of one line by moving the recording head once and a multi-path recording system which forms an image of one line by moving the recording head plural times. The one-path recording system naturally forms the image at higher speed than the multi-path recording system.

However, when piezoelectric elements are used as a pressure generating unit which generates an ink droplet ejecting force in a recording head, there is a limitation to making the nozzle density high. Therefore, when an image is formed by the one-path non-interlaced system, the resolution of the image is inevitably lowered.

In order to solve this problem, a method in which one pixel is formed by multi-level dots is used so as to make image quality high. As for the multi-level-dot method, for example, there are a method in which the size of the dot itself is changed, a method.in which one pixel is formed by ejecting plural small dots, and a method in which the concentration of ink itself is changed.

A high quality image can be formed for an image such as a photograph by using the multi-level dots; however, the multi-level-dot method is hardly effective for letters and graphics. In the case of the letters and the graphics, the dot size must be large enough to fill the background part. When a small-size dot is used, the letters and the graphics are formed with low concentration. Consequently, in a binary image such as letters and graphics, a problem peculiar to the low resolution occurs. Especially, in the case of the letter, letter quality is degraded and the letter is hardly readable.

A relationship between the problem peculiar to the low resolution and the property of ink is explained in detail. In an inkjet recording apparatus, an image is represented by dots which dots are formed in a matrix shape in the main scanning direction (scanning direction of the recording head) and in the sub scanning direction (paper carrying direction) which is orthogonal to the main scanning direction.

When a letter is printed by using dots, letter quality greatly depends on the resolution of the letter to be printed. For example, when a letter is printed at the resolution of 600 dpi, the number of dots is four times as many as that at the resolution of 300 dpi; therefore a fine part of the letter can be represented. Consequently, the letter quality becomes excellent. Especially, at a slanting part of the letter, the number of dots increases (or decreases) in a step shape corresponding to the resolution. On the other hand, when a letter is printed at the resolution of 300 dpi, a jaggy line is noticeable.

Separately, when ink which easily penetrates into a paper is used, jagginess is not noticeable; however, when ink which hardly penetrates into a paper is used, for example, when pigment type ink is used, the jagginess noticeably appears especially at low resolution recording; with this, the letter quality is lowered.

In an image forming apparatus using a laser, methods to reduce the jagginess are disclosed in Patent Documents 1 through 3.

In Patent Document 1, an image forming apparatus which prints an image by using plural color dots including black dots is disclosed. The image forming apparatus includes a dot data generating unit which generates binary dot data of each color forming the image data, a storing unit which stores the dot data, an edge dot determining unit which determines black edge dots positioned at a contour part (outline part) of an image to be printed from black dot data stored in the storing unit, and a modulating unit which modulates the dot data so that the sizes of the black edge dots and dots of the other colors are smaller than the size of black dots other than the black edge dots.
[Patent Document 1] Japanese Patent No. 3029533

In Patent Document 2, an image processing apparatus is disclosed. The image processing apparatus includes an edge shape pattern storing unit, a multi-level dot pixel pattern storing unit, an edge shape pattern determining unit, and a multi-level dot pixel pattern selecting unit. The edge shape pattern storing unit stores plural edge shape patterns for a target pixel. The multi-level dot pixel pattern storing unit stores a high resolution multi-level dot pixel pattern to execute a smoothing process by a multi-level dot pixel output, corresponding to an edge shape pattern which is stored in the edge shape pattern storing unit. The edge shape pattern determining unit determines an edge shape pattern for the target pixel from the plural edge shape patterns stored in the edge shape pattern storing unit for an input binary image. The multi-level dot pixel pattern selecting unit selects a specific multi-level dot pixel pattern from high resolution multi-level dot pixel patterns stored in the multi-level dot pixel storing unit based on an edge shape pattern determined by the edge shape pattern determining unit.
[Patent Document 2] Japanese Laid-Open Patent Application No. 10-126610

In Patent Document 3, an image forming apparatus is disclosed. The image forming apparatus includes a storing unit, a detecting unit, and a dot diameter correcting unit. The storing unit stores plural dot patterns in which white dots exist among black dots and data which variably correct so that the size of the dot diameter of black dots is smaller than the current size beforehand in a manner so that the plural dot patterns correspond to the data. The detecting unit detects a dot pattern equal to a dot pattern of input dot image data from the plural dot patterns stored in the storing unit. The dot diameter correcting unit variably corrects so that the size of the dot diameter of black dots is smaller than the current size for the input dot image data based on the data stored in the storing unit when an equal dot pattern is detected by the detecting unit.
[Patent Document 3] Japanese Patent No. 3531454

However, a jaggy-correcting technology described in Patent Documents 1 through 3 cannot be applied to an image forming apparatus which forms an image by using ink droplets of recording liquid.

That is, the above technology is effective for an image forming apparatus such as an LED printer and a laser printer in which specified small dots can be obtained with almost no expansion of dots on a normal paper because toners whose grain diameter is 10 µm or less are used. In addition, in the laser printer, since the emission position and the wavelength of the laser can be adjusted finely, a dot of a specified size can be formed at a most appropriate position. Therefore, the technology can be applied to the laser printer.

On the other hand, when an image forming apparatus using recording liquid is compared with a laser printer, in the image forming apparatus using the recording liquid, ink largely expands. In addition, when the image forming apparatus using recording liquid is compared with a laser printer or an LED printer, in the image forming apparatus using the recording liquid, since it needs more time to form a dot, it is difficult to have various dot sizes which are changed by the number and the length of driving pulses during a driving cycle, and a few dot sizes can be used at most. In addition, an LED printer or a laser printer can change a dot position relatively freely in a pixel; however, in the image forming apparatus using the recording liquid, the dot position is determined at an almost fixed position in a pixel and cannot be changed relatively freely in the pixel.

In Patent Document 4, an image forming apparatus is disclosed. In the image forming apparatus, at least dots at a step-shaped changing part which is an outline part of a letter or graphics are formed to have a smaller size than dots at a part other than the step-shaped changing part; in addition, a dot forming method of the smaller size dots is different in a slanted part of the outline part.
[Patent Document 4] Japanese Laid-Open Patent Application No. 2004-17546

In addition, in Patent Document 5, an image processing apparatus is disclosed. The image processing apparatus uses a smoothing method called an anti-aliasing method.
[Patent Document 5] Japanese Laid-Open Utility Model Application No. 3-113452

In addition, in Patent Document 6, an image processing method is disclosed. In the image processing method, two modes in which a smoothing process is executed and is not executed are provided and the smoothing process is applied only to letters and graphics.
[Patent Document 6] Japanese Laid-Open Patent Application No. 2004-17552

However, in the smoothing method called the anti-aliasing method, as described in Patent Document 5, since the outline part is formed by dots having great number of gradations, the smoothing can be executed highly accurately; however, the processes are complex and a long processing time is required. Therefore, the method is not suitable for a recently produced image forming apparatus such as an inkjet recording apparatus which needs high throughput.

In inkjet recording, in order to obtain a high quality image, it is effective to have many gradations for a dot and make resolution high. However, since nozzle resolution is low caused by a limitation of a nozzle arraying pitch, when it is attempted to make resolution in the sub scanning direction (paper carrying direction) high, dots are formed by plural scanning. Consequently, recording speed is lowered and it is extremely difficult to realize both high speed printing and high resolution.

In order to achieve both the high speed printing and the high resolution, there is the following method. That is, an image is formed with low resolution in the direction where restriction exists caused by nozzle resolution of a recording head and with high resolution in the direction where the restriction does not exist. For example, in a serial type image forming apparatus, an image is formed with high resolution in a direction where high resolution can be realized by making an ink droplet ejecting frequency high with a high driving frequency of a pressure generating unit without changing the printing speed (carriage moving speed).

However, in this case, since the resolution in the main scanning direction becomes high, depending on an angle of an outline part of an image, the outline part is changed in a step shape with high resolution and jagginess is not noticeable; however, depending on another angle, the outline part is changed in a step shape with low resolution and jagginess is noticeable.

Therefore, jaggy correction is required to be performed by a smoothing process. However, in Patent Documents 1 through 6, a case in which resolution is different between the main scanning direction and the sub scanning direction is not described. Consequently, in the conventional technologies, a process for smoothing becomes complex due to high resolution in one direction, cost increases for installing additional memories, and printing time increases caused by the increase in processing time.

### DISCLOSURE OF THE INVENTION

The present invention may solve one or more of the problems in the conventional technologies. According to embodiments of the present invention, there is provided an image processing method, a program thereof, and an image forming apparatus, in which both high printing speed and high image quality are realized.

According one aspect of the present invention, there is provided an image processing method as specified in the independent claim 11.

In this, the detected dot to be converted is a dot of a blank part of the image and is converted into a small size dot. Further, the detected one or more dots to be converted are dots of plural blank parts of the image and are converted into a small size dot.

In addition, the detected dot to be converted is a dot of an image part of the image and is converted into a small size dot. Further, the detected one or more dots to be converted are dots of plural image parts of the image and are converted into a small size dot.

In addition, the small size dot is selected from plural kinds of small size dots. Further, the detected one or more dots to be converted are converted into the predetermined dot corresponding to the slant of the outline part of the image.

In addition, the detected one or more dots to be converted are converted into the predetermined dot corresponding to a color of a dot of the image. Moreover, when the image is a letter image, one or more dots near the step-shaped changing part of the letter image are not converted into the predetermined dot depending on the font size of the letter image. Further, the one or more dots near the step-shaped changing part of the image are not converted into the predetermined dot depending on the resolution in the first direction and the second direction.

According to another aspect of the present invention, there is provided an image forming apparatus as specified in the independent claim 11. .

According to another aspect of the present invention, there is provided a program as set forth in claim 20 which causes a computer to execute the image processing method as described above.

In this, the first direction is the moving direction of a recording head (main scanning direction) in a serial type image forming apparatus and a nozzle arraying direction of a recording head in a line type image forming apparatus, and the second direction is a recording medium carrying direction (sub scanning direction).

According to the image processing method, the program thereof, and the image forming apparatus in the embodiments of the present invention, when one or more dots near a step-shaped changing part of an outline part of an image are converted into a predetermined dot, one or more dots to be converted are detected by using an "m × n" dot window in which the number of dots "m" corresponds to the resolution in the first direction and the number of dots "n" corresponds to the resolution in the second direction. Therefore, both high printing speed and high image quality are realized.

The features and advantages of the present invention will become more apparent from the following detailed description of preferred embodiments given with reference to the accompanying drawings.

### BRIEF DESCRIPTION OF THE DRAWINGS

Fig. 1 is a schematic diagram of a part of an inkjet recording apparatus which can form multi-level dots according to embodiments of the present invention;
Fig. 2 is a plan view of a part of the inkjet recording apparatus shown in Fig. 1;
Fig. 3 is a diagram showing disposition of ink droplet ejecting heads shown in Fig. 2;
Fig. 4 is a diagram showing another disposition of the ink droplet ejecting heads shown in Fig. 2;
Fig. 5 is a cross-sectional view of the ink droplet ejecting head along the long length direction of a liquid chamber of the ink droplet ejecting head;
Fig. 6 is a cross-sectional view of the ink droplet ejecting head along the short length direction of the liquid chamber of the ink droplet ejecting head;
Fig. 7 is a block diagram showing a controlling section of the inkjet recording apparatus according to the embodiments of the present invention;
Fig. 8 is a block diagram showing a part of a head driving controller and a head driver shown in Fig. 7;
Fig. 9 is a timing diagram showing an operation of the head driver shown in Fig. 8;
Fig. 10 is a block diagram showing an image processing apparatus in which a program of an image processing method according to the embodiments of the present invention is installed;
Fig. 11 is a diagram showing a letter printed by using dot data obtained in an image process which does not use jaggy correction;
Fig. 12 is a diagram showing dot positions of a slanting line of the letter shown in Fig. 11 nearly parallel to the main scanning direction;
Fig. 13 is a diagram showing dot positions of a slanting line of the letter shown in Fig. 11 nearly parallel to the sub scanning direction;
Fig. 14 is a diagram showing dot positions of a slanting line of a letter to be printed nearly parallel to the main scanning direction in a first example to which the jaggy correction is applied according to a first embodiment of the present invention;
Fig. 15 is a diagram showing dot positions of the slanting line of the letter to be printed nearly parallel to the main scanning direction in a second example to which the jaggy correction is applied according to the first embodiment of the present invention;
Fig. 16 is a diagram showing dot positions of the slanting line of the letter to be printed nearly parallel to the main scanning direction in a third example to which the jaggy correction is applied according to the first embodiment of the present invention;
Fig. 17 is a diagram showing dot positions of the slanting line of the letter to be printed nearly parallel to the main scanning direction in a fourth example to which the jaggy correction is applied according to the first embodiment of the present invention;
Fig. 18 is a diagram showing dot positions of the slanting line of the letter to be printed nearly parallel to the main scanning direction in a fifth example to which the jaggy correction is applied according to the first embodiment of the present invention;
Fig. 19 is a diagram showing dot positions of the slanting line of the letter to be printed nearly parallel to the main scanning direction in a sixth example to which the jaggy correction is applied according to the first embodiment of the present invention;
Fig. 20 is a diagram showing dot positions of the slanting line of the letter to be printed nearly parallel to the main scanning direction in a seventh example to which the jaggy correction is applied according to the first embodiment of the present invention;
Fig. 21 is a diagram showing dot positions of the slanting line of the letter to be printed nearly parallel to the main scanning direction in an eighth example to which the jaggy correction is applied according to the first embodiment of the present invention;
Fig. 22 is a diagram showing dot positions of the slanting line of the letter to be printed nearly parallel to the sub scanning direction according to the first embodiment of the present invention;
Fig. 23 is a diagram showing a first different example which the jaggy correction is applied to a slanting line of a letter to be printed nearly parallel to the main scanning direction according to the first embodiment of the present invention;
Fig. 24 is a diagram showing a second different example which the jaggy correction is applied to a slanting line of a letter to be printed nearly parallel to the main scanning direction according to the first embodiment of the present invention;
Fig. 25 is a diagram showing a general window which is used in a pattern matching method;
Fig. 26 is a diagram showing a window which is used in the pattern matching method in the embodiments of the present invention;
Fig. 27 is a flowchart showing a pattern matching process according to the first embodiment of the present invention;
Fig. 28 is a diagram showing reference patterns which are used to convert blank dots into small dots in the pattern matching process shown in Fig. 27;
Fig. 29 is a diagram showing reference patterns which are used to convert image dots into small dots in the pattern matching process shown in Fig. 27;
Fig. 30 is a diagram showing an example of dot data to which the pattern matching process is applied by using the reference patterns shown in Figs. 28 and 29;
Fig. 31 is a flowchart showing a small ink droplet dot data forming process in blank dots according to the first embodiment of the present invention;
Fig. 32 is a diagram showing an example of the small ink droplet dot data forming process shown in Fig. 31;
Fig. 33 is a flowchart showing the small ink droplet dot data forming process in font data according to the first embodiment of the present invention;
Fig. 34 is a diagram showing an example of the small ink droplet dot data forming process shown in Fig. 33;
Fig. 35 is a flowchart showing a jaggy correction process according to a second embodiment of the present invention;
Fig. 36 is a diagram showing dot positions of a slanting line of a letter to be printed nearly parallel to the main scanning direction in a first example to which jaggy correction is applied according to the second embodiment of the present invention;
Fig. 37 is a diagram showing dot positions of a slanting line of a letter to be printed nearly parallel to the main scanning direction in a second example to which the jaggy correction is applied according to the second embodiment of the present invention;
Fig. 38 is a diagram showing dot positions of a slanting line of a letter to be printed nearly parallel to the main scanning direction in a third example to which the jaggy correction is applied according to the second embodiment of the present invention;
Fig. 39 is a diagram showing dot positions of a slanting line of a letter to be printed nearly parallel to the main scanning direction in a fourth example to which the jaggy correction is applied according to the second embodiment of the present invention;
Fig. 40 is a diagram showing dot positions of a slanting line of a letter to be printed nearly parallel to the main scanning direction in a fifth example to which the jaggy correction is applied according to the second embodiment of the present invention;
Fig. 41 is a diagram showing dot positions of a slanting line of a letter to be printed nearly parallel to the main scanning direction in a sixth example to which the jaggy correction is applied according to the second embodiment of the present invention;
Fig. 42 is a diagram showing dot positions of a slanting line of a letter to be printed nearly parallel to the main scanning direction in a seventh example to which the jaggy correction is applied according to the second embodiment of the present invention;
Fig. 43 is a diagram showing dot positions of a slanting line of a letter to be printed nearly parallel to the main scanning direction in an eighth example to which the jaggy correction is applied according to the second embodiment of the present invention; and
Fig. 44 is a block diagram showing an image forming apparatus in which the program of the jaggy correction process according to the embodiments of the present invention is installed.

### BEST MODE FOR CARRYING OUT THE INVENTION

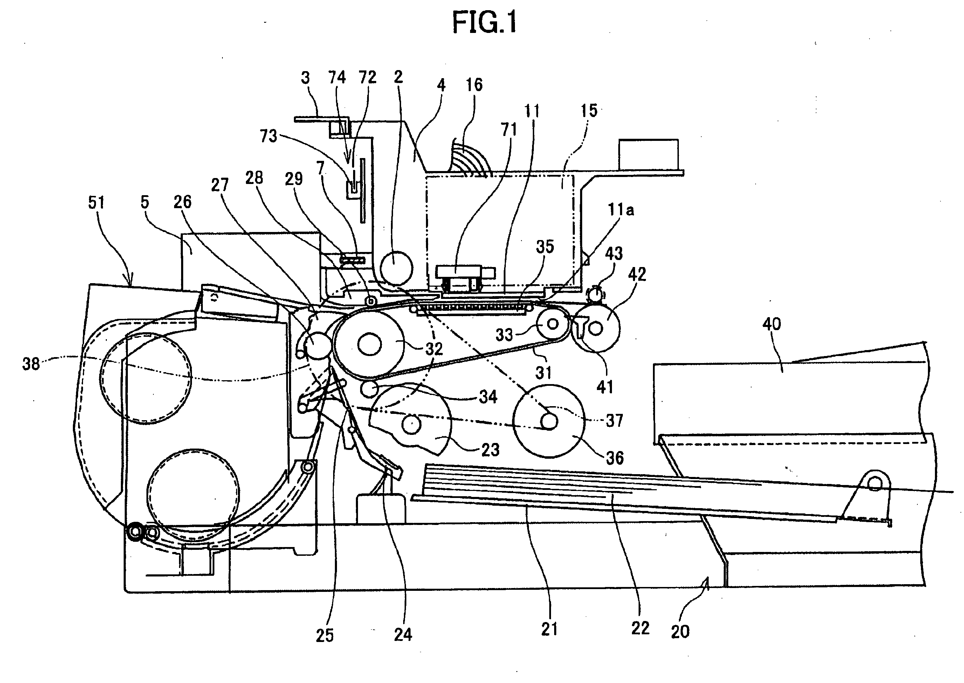

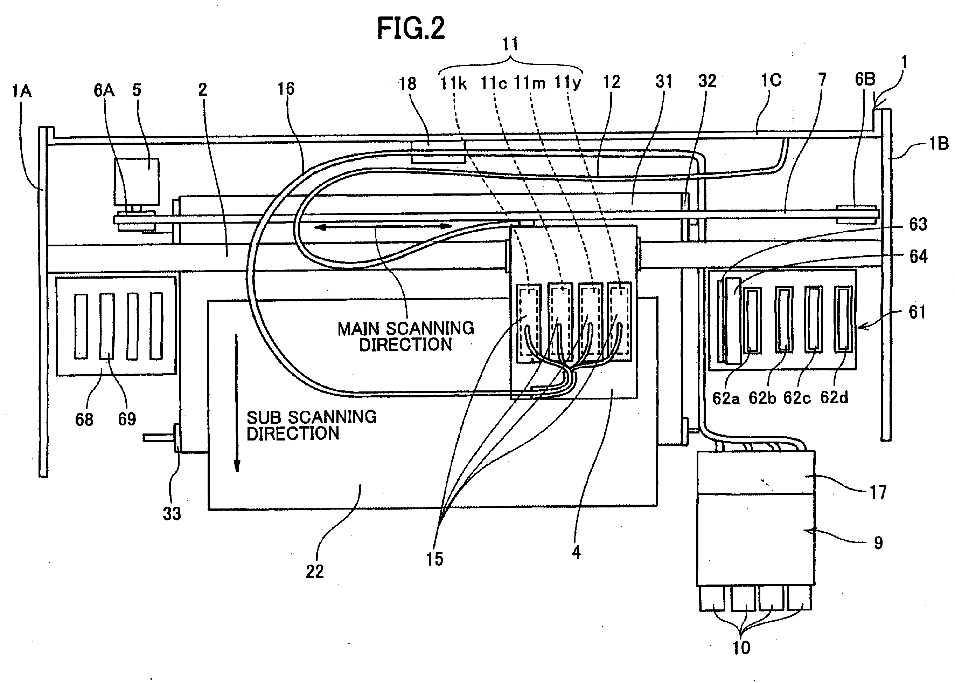

Next, referring to the drawings, embodiments of the present invention are explained in detail. The embodiments of the present invention are explained by using an inkjet recording apparatus as an image forming apparatus. Fig. 1 is a schematic diagram of a part of the inkjet recording apparatus which can form multi-level dots according to the embodiments of the present invention. Fig. 2 is a plan view of a part of the inkjet recording apparatus shown in Fig. 1. Referring to Figs. 1 and 2, structural elements of the inkjet recording apparatus according to the embodiments of the present invention are explained.

In the inkjet recording apparatus, a carriage 4 is slidably held in the main scanning direction by a guide rod 2 which is hung between a left side plate 1A and a right side plate 1B of a frame 1 and a stay 3, and the carriage 4 is moved in the main scanning direction (the arrow directions in Fig. 2) by a main scanning direction motor 5 via a timing belt 7 which is wound around a driving pulley 6A and a driven pulley 6B.

In the carriage 4, a recording head 11 composed of, for example, four ink droplet ejecting heads 11k, 11c, 11m, and 11y that eject ink droplets of black (Bk), cyan (C), magenta (M), and yellow (Y), respectively, is disposed in a manner so that the ink ejecting direction is downward. In this, a nozzle array of nozzle faces 11a in which plural ink ejecting nozzles of the recording head 11 are formed is disposed in the orthogonal direction (the sub scanning direction) of the main scanning direction. In the above, four independent recording heads for ejecting four corresponding colors are used; however, one recording head which can eject four-color ink by having plural nozzles, or plural heads can be used. In addition, the number of colors and the order of disposition of the heads are not limited to the above.

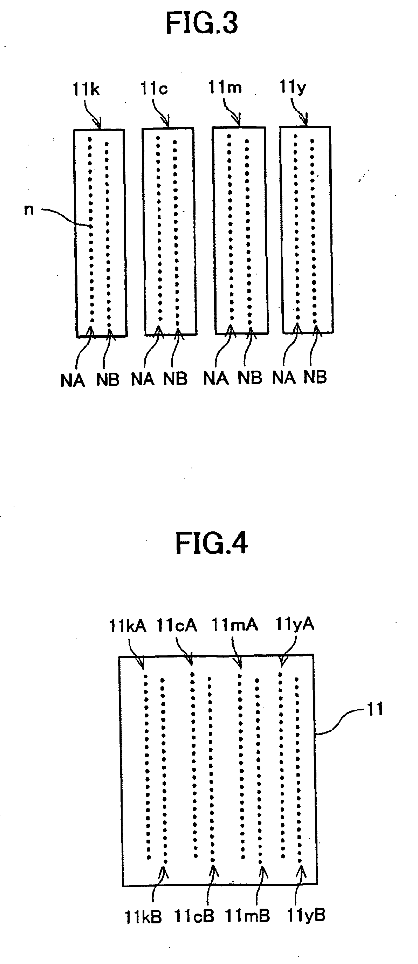

In the embodiments of the present invention, as the recording head 11, the four ink droplet ejecting heads 11k, 11c, 11m, and 11y that eject ink droplets of black (Bk), cyan (C), magenta (M), and yellow (Y), respectively, are used. Fig. 3 is a diagram showing disposition of the ink droplet ejecting heads shown in Fig. 2. As shown in Fig. 3, each of the four ink droplet ejecting heads 11k, 11c, 11m, and 11y has two nozzle rows (NA and NB) in which plural "n" nozzles for ejecting ink droplets are arrayed in one row. Fig. 4 is a diagram showing another disposition of the ink droplet ejecting heads shown in Fig. 2. As shown in Fig. 4, two nozzle rows 11kA and 11kB, two nozzle rows 11cA and 11cB, two nozzle rows 11mA and 11mB, and two nozzle rows 11yA and 11yB can be disposed in one recording head 11. Or, the recording head 11 can be composed of a black ink droplet ejecting head having one nozzle row or plural nozzle rows and color ink droplet ejecting heads having one nozzle row or plural nozzle rows for each color.

Each of the ink droplet ejecting heads (inkjet heads) of which the recording head 11 is composed provides a piezoelectric actuator formed by a piezoelectric element as a pressure generator that generates pressure for ejecting ink droplets. That is, as the pressure generator, when a thermal type pressure generator, which uses a heating resistor for generating bubbles, is used, it is difficult to accurately control the volume of the bubble, and the size of a dot which can be formed cannot be largely changed. Consequently, basically, the size is binary, and generally, the gradation is obliged to be expressed by the number of formed dots. On the other hand, when the piezoelectric actuator is used, the amount of displacement of the piezoelectric element can be accurately controlled, and the size of a dot which is formed can be largely changed. Consequently, multiple-gradation can be expressed. In this case, in order to change the diameter of the dot, that is, in order to form multi-level dots, for example, the voltage, the pulse width, and the number of pulses of the driving pulse are changed.

A driver IC is installed in the recording head 11 and is connected to a controller (not shown) via a harness 12 {FPC (flexible print cable)}.

Sub tanks 15 for four colors for supplying ink to the recording head 11 are installed in the carriage 4. Ink of each color is supplied from the corresponding ink cartridges 10 installed in a cartridge storing section 9 to the corresponding sub tanks 15 via corresponding ink supplying tubes 16. An ink supplying pump 17 for supplying each ink to its ink supplying tube 16 is installed in the cartridge storing section 9. The ink supplying tubes 16 are held by a back plate 1C of the frame 1 on the middle of the connection by using a clamping member 18.

In order to feed a paper 22 stored on a paper storing section 21 of a paper feeding tray 20, a half-moon-shaped roller (paper feeding roller) 23 which supplies each paper 22 from the paper storing section 21, and a paper separation pad 24, made of a material having a large friction factor, disposed facing the paper feeding roller 23, are installed. The paper separation pad 24 is pushed toward the paper feeding roller 23.

In order to supply the paper 22 to a position under the recording head 11, a guide member 25 for guiding the paper 22, a counter roller 26, a paper carrying guide member 27, a pushing member 28 including a pressure applying roller 29 are installed. Further, a carrying belt 31 which carries the paper 22 at a position facing the recording head 11 by adhering with an electrostatic force is installed.

The carrying belt 31 is an endless belt that is wound around a carrying roller 32 and a tension roller 33, and is rotated in the belt carrying direction (sub scanning direction), and is charged by a charging roller 34 while being rotated.

The carrying belt 31 can be a single-layered belt or a plural-layered belt (double-layered or more). When the carrying belt 31 is the single-layered belt, since the carrying belt 31 contacts the paper 22 and the charging roller 34, the entire layer is formed by an insulation material. When the carrying belt 31 is the plural-layered belt, it is preferable that a layer contacting the paper 22 and the charging roller 34 be formed by an insulation material and a layer not contacting the paper 22 and the charging roller 34 be formed by a conductive material.

As the insulation material for the single-layered carrying belt 31 and for the insulation layer of the plural-layered carrying belt 31, one of the following materials can be used. That is, resin such as PET, PEI, PVDF, PC, ETFE, and PTEF, or elastomer without containing a conductive material can be used, and the volume resistivity of the material is 1012 Ω cm or more; preferably, 1015 Ω cm. As the conductive material for the conductive layer of the plural-layered carrying belt 31, a material in which carbon is contained in the above resin or elastomer and the volume resistivity is 105 to 107 Ω cm is preferable.

The charging roller 34 contacts the insulation layer which is a front face of the carrying belt 31 (in the case of the plural-layered belt), is rotated by being moved by the rotation of the carrying belt 31, and pressure is applied to both ends of the axle. The charging roller 34 is made of a conductive material whose volume resistivity is 106 to 109 Ω cm. An AC bias voltage of, for example, 2 kV (high voltage) is applied to the charging roller 34 from an AC bias voltage supplying section (high voltage power source) (described below). The AC bias voltage can be a sine wave or a chopping wave; however, a square wave is preferable.

A guide member 35 is disposed on the back face of the carrying belt 31 corresponding to an image forming region of the recording head 11. The upper face of the guide member 35 protrudes beyond a line tangent to the carrying roller 32 and the tension roller 33 supporting the carrying belt 31 to the side of the recording head 11. With this, the flatness of the carrying belt 31 in the image forming region can be accurately maintained.

The carrying roller 32 is rotated by a sub scanning direction motor 36 via a driving belt 37 and a timing roller 38, and the carrying belt 31 is rotated in the belt carrying direction (see Fig. 2) by the rotation of the carrying roller 32. An encoder wheel in which a slit is formed is attached to the axle of the carrying roller 32, and a transmission type photo-sensor for detecting the slit is disposed. With this, a wheel encoder is composed of the encoder wheel and the photo-sensor. These are not shown in Fig. 2.

In order to output the paper 22 on which an image is recorded by the recording head 11 to a paper outputting tray 40, a paper separation claw 41 for separating the paper 22 from the carrying belt 31, paper outputting rollers 42 and 43 are disposed.

A both sides printing unit 51 is removably attached to the back side of the inkjet recording apparatus. The both sides printing unit 51 takes the paper 22 returned by the inverted rotation of the carrying belt 31 and inverts the paper 22 and feeds the inverted paper 22 between the counter roller 26 and the carrying belt 31. A paper manually inserting tray (not shown) is disposed on the both sides printing unit 51.

A nozzle maintaining and recovering mechanism 61 that operates to maintain a normal state of the nozzles of the recording head 11 and to cause the nozzles to recover from an abnormal state is disposed in a non-printing region located at one side in the main scanning direction of the carriage 4. The nozzle maintaining and recovering mechanism 61 provides caps 62a, 62b, 62c, and 62d (when those are not individually described, they are referred to as a cap 62) for capping the nozzle faces 11a of the recording head 11, a wiper blade 63 for wiping the nozzle faces 11a, and a remaining ink droplet receiving member 64 for receiving ink droplets which do not contribute to forming an image due to an increase of viscosity. In this, the cap 62a is a suction and humidity maintaining cap and the other caps 62b to 62d are humidity maintaining caps.

In addition, in the non-printing region located at the other side in the main scanning direction of the carriage 4, a remaining ink droplet receiving member 68 for receiving ink droplets during recording which do not contribute to forming an image due to the increase of viscosity is disposed, and openings 69 are provided in the remaining ink droplet receiving member 68 along the nozzle rows of the recording head 11.

A concentration sensor 71 formed by an infrared ray sensor for detecting the presence of the paper 22 is disposed in the carriage 4. The sensor is not limited to the infrared ray sensor. When the carriage 4 is at the home position, the concentration sensor 71 is disposed at a position of the side of the carrying belt 31 and at a position upstream in the paper carrying direction.

As described above, at the front side of the carriage 4, an encoder wheel 72 in which a slit is formed is disposed along the main scanning direction, and an encoder sensor 73 formed by a transmission type photo-sensor for detecting the slit is disposed on the front face side of the carriage 4. With this, a linear encoder for detecting the position of the carriage 4 in the main scanning direction is composed of the encoder wheel 72 and the encoder sensor 73.

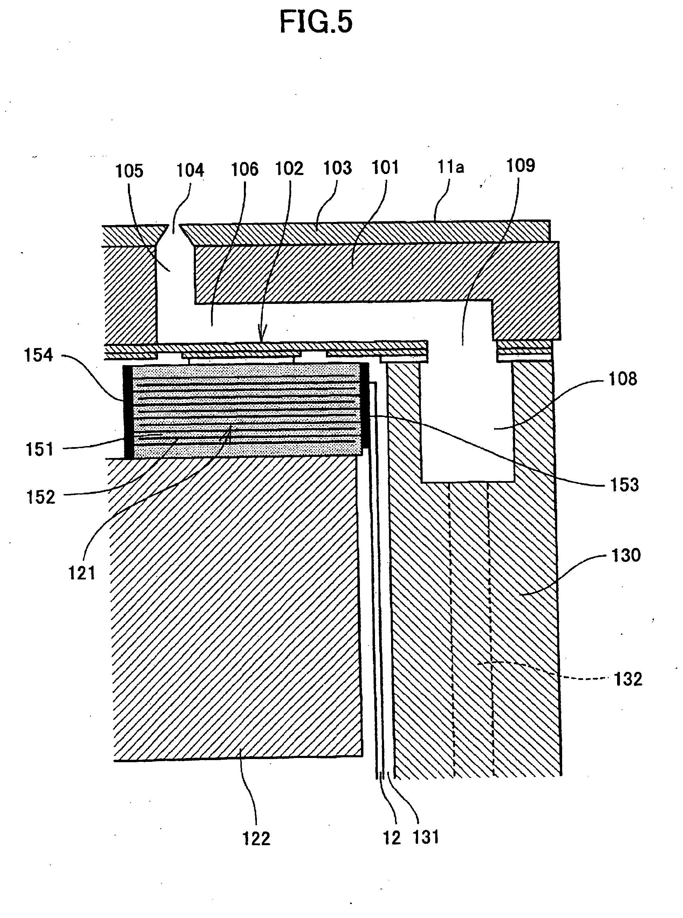

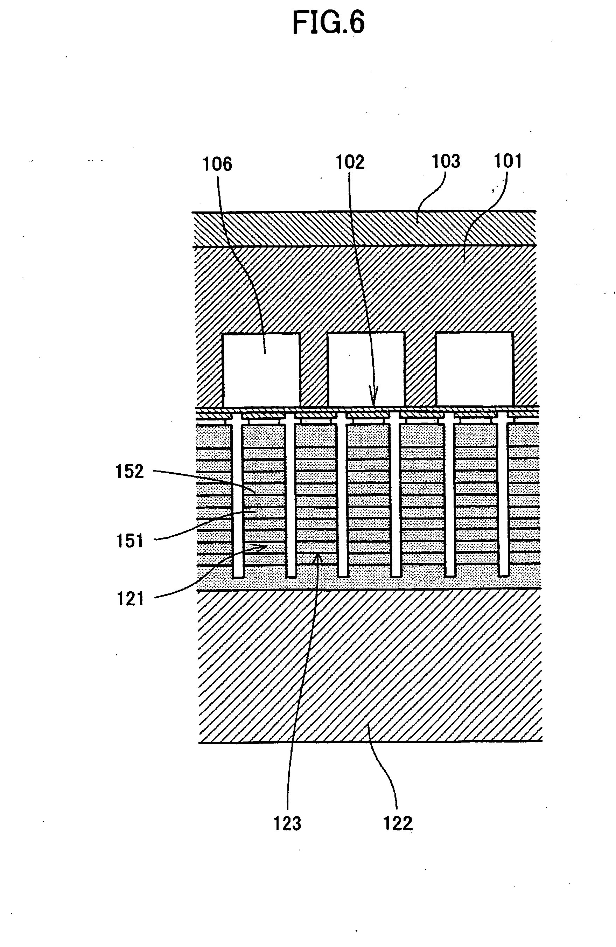

Next, in the inkjet recording apparatus, the ink droplet ejecting heads of which the recording head 11 is composed are explained. Fig. 5 is a cross-sectional view of the ink droplet ejecting head along the long length direction of a liquid chamber of the ink droplet ejecting head. Fig. 6 is a cross-sectional view of the ink droplet ejecting head along the short length direction of the liquid chamber of the ink droplet ejecting head.

In the ink droplet ejecting head, an ink flowing route plate 101 formed by applying anisotropic processing and so on to, for example, a single crystal silicon substrate; a vibration plate 102 formed by, for example, nickel electroforming, which plate 102 is bonded to the lower face of the ink flowing route plate 101; and a nozzle plate 103 bonded to the upper face of the ink flowing route plate 101 are stacked. With this, a nozzle connecting route 105 to which a nozzle 104 for ejecting ink droplets is connected, a liquid chamber 106, a common liquid chamber 108 for supplying ink to the liquid chamber 106, an ink supplying opening 109 connecting to the common liquid chamber 108, and so on are formed.

In addition, in the ink droplet ejecting head, a stacked type piezoelectric element 121 of two lines (one line in Fig. 6), which is a pressure generator (actuator) that applies pressure to ink in the liquid chamber 106 by deforming the vibration plate 102 as an electro-mechanical transducer, and a base substrate 122 to which the piezoelectric element 121 is secured are provided. A brace 123 (see Fig. 6) is formed between the piezoelectric elements 121. The brace 123 is formed at the same time as the piezoelectric elements 121 by separately forming piezoelectric members; however, since a driving voltage is not applied to the brace 123, the brace 123 is a simple brace.

A flexible print cable 12 on which a driving circuit (driving IC) is installed is connected to the piezoelectric element 121.

The edge parts of the vibration plate 102 are bonded to a frame member 130. In the frame member 130, a space 131, to which an actuator unit composed of the piezoelectric element 121, the base substrate 122, and so on are attached, is formed. Further, in the frame member 130, a concave section that becomes the common liquid chamber 108 and an ink supplying hole 132 for supplying ink from the outside to the common liquid chamber 108 are formed. The frame member 130 is formed by injection molding of, for example, thermosetting resin such as epoxy resin or polyphenylene sulfite.

The ink flowing route plate 101 is formed by applying anisotropic etching to, for example, a single crystal silicon substrate of a crystal face (110) by using alkaline liquid such as potassium hydroxide water-soluble solution (KOH). With this, the nozzle connecting route 105 and the liquid chamber 106 are formed. However, the material is not limited to single crystal silicon; stainless steel or photosensitive resin can be used for the ink flowing route plate 101.

The vibration plate 102 is made of a nickel plate by, for example, electroforming. However, the vibration plate 102 can be made of a metal plate other than nickel plate or a material in which a metal and resin are bonded. The piezoelectric element 121 and the brace 123 are bonded to the vibration plate 102 by adhesive, and further, the frame member 130 is bonded.

In the nozzle plate 103, the nozzle 104 of 10 to 30 µm diameter is formed corresponding to each liquid chamber 106, and the nozzle plate 103 is bonded to the ink flowing route plate 101 by adhesive. A water repellent layer is formed on the uppermost face of the nozzle plate 103 made of a metal member via a predetermined layer. The face of the nozzle plate 103 is the nozzle face 11a described above.

The piezoelectric element 121 is a stacked type piezoelectric element (PZT) in which a piezoelectric material 151 and an internal electrode 152 are alternately stacked. An individual electrode 153 is connected to the internal electrode 152 drawn out to one side, and a common electrode 154 is connected to the internal electrodes 152 drawn out to the other side. In the embodiments of the present invention, pressure is applied to ink in the liquid chamber 106 by using displacement in the d33 direction as the piezoelectric direction of the piezoelectric element 121. However, pressure can be applied to ink in the liquid chamber 106 by using displacement in the d31 direction. In addition, one line of the piezoelectric element 121 can be disposed on one base substrate 122.

In the ink droplet ejecting head with the above structure, when a voltage applied to the piezoelectric element 121 is lowered from the reference voltage, the piezoelectric element 121 contracts, and the vibration plate 102 is moved downward so that the volume of the liquid chamber 106 is expanded, and ink flows into the liquid chamber 106. After this, when the piezoelectric element 121 is expanded in the stacked direction by raising the voltage applied to the piezoelectric element 121, the vibration plate 102 is displaced in the nozzle direction and the volume of the liquid chamber 106 is reduced. With this, pressure is applied to ink in the liquid chamber 106 and ink droplets are ejected from the nozzle 104.

When the voltage applied to the piezoelectric element 121 is returned to the reference voltage, the vibration plate 102 is returned to the initial position, the volume of the liquid chamber 106 is expanded so that negative pressure is generated, and ink flows into the liquid chamber 106 from the common liquid chamber 108. With this, the vibration of the meniscus face of the nozzle 104 is attenuated and stabilized. Then, an operation for subsequent ink droplet ejecting is performed.

In the driving method of the ink droplet ejecting head, ink droplets are ejected by the expansion of the piezoelectric element 121. However, depending on the structure, ink droplets can be ejected by the contraction of the piezoelectric element 121.

In the inkjet recording apparatus, each paper 22 is fed from the paper storing section 21 in the approximate upward direction by guided by the guide member 25. The paper 22 is carried between the carrying belt 31 and the counter roller 26, the tip of the paper 22 is guided by the paper carrying guide member 27, and the paper 22 is pushed to the carrying belt 31 by the pressure applying roller 29. With this, the carrying direction of the paper 22 is changed approximately 90 degrees.

At this time, an AC voltage is applied to the charging roller 34 from the AC bias supplying section (described below in detail) so that the carrying belt 31 is charged in the sub scanning direction with a charge voltage pattern in which a plus voltage and a minus voltage are alternately applied with a predetermined width. When the paper 22 is supplied on the carrying belt 31 on which the plus voltage and the minus voltage are alternately charged, the paper 22 is adhered to the carrying belt 31 with the electrostatic force, and the paper 22 is carried in the sub scanning direction by the rotation of the carrying belt 31.

When the recording head 11 is driven corresponding to an image signal while the carriage 4 is being moved, the recording head 11 records one line of an image on the stopped paper 22 by ejecting ink droplets. After carrying the paper 22 by a predetermined amount, the next line of the image is recorded on the paper 22. When a recording completion signal or a signal that the end of the paper 22 reaches the end of the recording region is received, the recording operation is finished, and the paper 22 is output to the paper outputting tray 40.

In case of the both sides printing, when an image is printed on one side of the paper 22, the paper 22 is supplied to the both sides printing unit 51 by inversely rotating the carrying belt 31, and the paper 22 is inverted. The inverted paper 22 is supplied again between the counter roller 26 and the carrying belt 31 and an image is printed on the other side of the paper 22 carried by the carrying belt 31 with timing control. After printing, the paper 22 on whose both sides images are printed is output to the paper outputting tray 40.

Next, ink (recording liquid) using in the inkjet recording apparatus is explained. When an image is printed by the inkjet recording apparatus, it is proper that dots applied to a paper expand by penetrating along the fiber of the paper. Therefore, it is preferable to use ink in which expansion of dots and feathering of the dots are as small as possible. Therefore, the following ink is recommendable. However, the ink is not limited to that.

Ink for the inkjet recording apparatus contains the following components (1) through (10):
(1) Pigment (a self-dispersing pigment), 6 wt% or more of total;
(2) Wetting agent 1;
(3) Wetting agent 2;
(4) Water-soluble organic solvent;
(5) Anionic or nonionic surfactant;
(6) Polyol or glycol ether that contains 8 or more carbon atoms;
(7) Emulsion;
(8) Preservative;
(9) PH adjustor; and
(10) Deionized water.

In this, a pigment as a colorant for printing and a solvent for dissolving or dispersing the pigment are used as essential components and a wetting agent, a surfactant, an emulsion, a preservative, and a pH adjustor are further used as additives. A wetting agent 1 and a wetting agent 2 are mixed so as to exploit the characteristics of the respective wetting agents and to easily adjust the viscosity of the ink.

The kind of (1) pigment is not particularly limited and both an inorganic pigment and an organic pigment can be used. As an inorganic pigment, there can be used any of carbon blacks produced by well-known methods such as a contact method, a furnace method and a thermal method as well as titanium oxide and iron oxide. In addition, there can be used as an organic pigment, azo pigments (including azo lakes, insoluble azo pigments, condensed azo pigments, chelate-type azo pigments, and so on), polycyclic pigments (for example, phthalocyanine pigments, perylene pigments, perynone pigments, anthraquinone pigments, quinacridone pigments, dioxazine pigments, thioindigo pigments, isoindolinone pigments, quinophthalone pigments, and so on), chelate-type dyes (for example, chelate-type basic dyes, chelate-type acidic dyes, and so on), nitro pigments, nitroso pigments, aniline black, and so on.

Among these, a pigment having good affinity with water is preferably used. The particle diameter of a pigment is preferably 0.05 µm to 10 µm or less, more preferably, 1 µm or less, most preferably 0.16 µm or less.

The content of a pigment as a colorant in ink is preferably about 6% by weight to about 20% by weight, more preferably about 8% by weight to about 12% by weight.

As specific examples of pigments that are preferably used, the following pigments are provided.

For black ink, there can be provided carbon blacks (C.I. pigment black 7) such as furnace black, lamp black, acetylene black and channel black, metals such as copper and iron (C.I. pigment black 11), titanium oxide, and organic pigments such as aniline black (C.I. pigment black 1).

In addition, for color ink, there can be provided C.I. pigment yellows 1 (fast yellow G), 3, 12 (disazo yellow AAA), 13, 14, 17, 24, 34, 35, 37, 42 (yellow iron oxide), 53, 55, 81, 83 (disazo yellow HR), 95, 97, 98, 100, 101, 104, 108, 109, 110, 117, 120, 138 and 153, C.I. pigment oranges 5, 13, 16, 17, 36, 43 and 51, C.I. pigment reds 1, 2, 3, 5, 17, 22 (brilliant fast scarlet), 23, 31, 38, 48:2 (permanent red 2B (Ba)), 48:2 (permanent red 2B (Ca)), 48:3 (permanent red 2B (Sr)), 48:4 (permanent red 2B (Mn)), 49:1, 52:2, 53:1, 57:1 (brilliant carmine 6B), 60:1, 63:1, 63:2, 64:1, 81 (rhodamine 6G lake), 83, 88, 101 (red iron oxide), 104, 105, 106, 108 (cadmium red), 112, 114, 122 (quinacridone magenta), 123, 146, 149, 166, 168, 170, 172, 177, 178, 179, 185, 190, 193, 209 and 219, C.I. pigment violets 1 (rhodamine lake), 3, 5:1, 16, 19, 23 and 38, C.I. pigment blues 1, 2, 15 (phthalocyanine blue R), 15:1, 15:2, 15:3 (phthalocyanine blue E), 16, 17:1, 56, 60 and 63, and C.I. pigment greens 1, 4, 7, 8, 10, 17, 18 and 36.

In addition, there can be also used graft pigments obtained by treating the surface of a pigment (for example, carbon) with a resin which is allowed to disperse in water and processed pigments obtained by providing the surface of a pigment (for example, carbon) with a functional group such as a sulfone group or a carboxyl group which is allowed to disperse in water.

Further, a pigment contained in a microcapsule and allowed to disperse in water may be used.

In this, according to the embodiments, it is preferable that a pigment for black ink be added into ink as pigment dispersion liquid obtained by dispersing a pigment with a dispersant in a water-soluble medium. As a preferable dispersant, well-known dispersing liquid used for preparing conventionally publicly-known pigment dispersion liquid can be used.

As a material for the dispersing liquid, for example, the following materials can be provided. That is, there can be provided poly(acrylic acid), poly(methacrylic acid), acrylic acid-acrylonitrile copolymer, vinyl acetate-acrylic acid ester copolymers, acrylic acid-alkyl acrylate copolymers, styrene-acrylic acid copolymer, styrene-methacrylic acid copolymer, styrene-acrylic acid-alkyl acrylate copolymers, styrene-methacrylic acid-alkyl acrylate copolymers, styrene-α-methylstyrene-acrylic acid copolymer, styrene-α-methylstyrene-acrylic acid-alkyl acrylate copolymers, styrene-maleic acid copolymer, vinylnaphthalene-maleic acid copolymer, vinyl acetate-ethylene copolymer, vinyl acetate-fatty acid vinyl ester-ethylene copolymers, vinyl acetate-maleic acid ester copolymer, vinyl acetate-crotonic acid copolymer and vinyl acetate-acrylic acid copolymer..

In addition, according to the embodiments of the present invention, the weight-average molecular weights of these copolymers are preferably 3,000 to 50,000, more preferably 5,000 to 30,000, most preferably 7,000 to 15,000. The content of a dispersant is appropriately determined so that a pigment can be stably dispersed and other effects are not lost. The content ratio of a pigment to a dispersant is preferably 1:0.06 to 1:3, more preferably 1:0.125 to 1:3.

The content of a pigment used as a colorant is 6% by weight to 20% by weight per the total weight of recording ink and the pigment is in the form of particles with a particle diameter of 0.05 µm to 0.16 µm. The particles are dispersed in water with a dispersant and the dispersant is a polymeric dispersant with a molecular weight of 5,000 to 100,000. Image quality can be improved when at least one pyrrole derivative, particularly 2-pyrrolidone, is used as a water-soluble organic solvent.

In regard to (2) through (4) wetting agents 1 and 2 and a water-soluble organic solvent, water is frequently used as a liquid medium in ink but, for example, the following water-soluble organic solvents may be used in order to make ink have a desired physical property, to prevent ink from drying, and to improve the dissolution stability of ink components. Plural of these water-soluble organic solvents may be used. For example, the following specific examples of the wetting agents and the water-soluble organic solvent are provided.

That is, there can be provided multi-valent alcohols such as ethylene glycol, diethylene glycol, triethylene glycol, propylene glycol, dipropylene glycol, tripropylene glycol, tetraethylene glycol, hexylene glycol, polyethylene glycol, polypropylene glycol, 1,5-pentanediol, 1,6-hexanediol, glycerol, 1,2,6-hexanetriol, 1,2,4-butanetriol, 1,2,3-butanetriol and pentanetriol; multi-valent alcohol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether and propylene glycol monoethyl ether; multi-valent alcohol aryl ethers such as ethylene glycol monophenyl ether and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethylimidazolidinone, ε-caprolactam and γ-butyrolactone; amides such as formamide, N-methylformamide and N,N-dimethylformamide; amines such as monoethanolmine, diethanolamine, triethanolamine, monoethylamine, diethylamine and triethylamine; sulfur-contaning compounds such as dimethylsulfoxide, sulfolane and thiodiethanol; and propylene carbonate and ethylene carbonate.

Among these organic solvents, particularly, diethylene glycol, thiodiethanol, polyethylene glycol 200 - 600, triethylene glycol, glycerol, 1,2,6-hexanetriol, 1,2,4-butanetriol, pentanetriol, 1,5-pentanediol, 2-pyrrolidone and N-methyl-2-pyrrolidone are preferable. These solvents have excellent properties in the solubility of ink components and the prevention of ink jet failure caused by vaporization of water.

As other wetting agents, wetting agents containing a saccharide are preferable. As specific examples of saccharides, onosaccharides, disaccharides, oligosaccharides (including trisaccharides and tetrasaccharides) and polysaccharides can be provided. Preferably, there are provided glucose, mannose, fructose, ribose, xylose, arabinose, galactose, maltose, cellobiose, lactose, sucrose, trehalose and maltotriose. In this, polysaccharides are saccharides in a broader sense, including substances that are widely existing in nature such as α-cyclodextrine and cellulose.

In addition, as derivatives from these saccharides, there can be provided reduced saccharides from the aforementioned succharides (for example, represented by sugar alcohols (general formular HOCH₂(CHOH)ₙCH₂OH, where n represents an integer of 2 to 5)), oxidized saccharides from the aforementioned succharides (for example, aldonic acid, uronic acid, and so on), amino acids and thio acids. Particularly, sugar alcohols are preferable and, as specific examples thereof, maltitol and sorbitol are provided.

The content of the saccharide is appropriately in the range of 0.1% by weight to 40% by weight, preferably 0.5% by weight to 30% by weight per an ink composition.

In addition, (5) surfactant is not particularly limited and, as an anionic surfactant, for example, there can be provided polyoxyethylene alkyl ether acetate salts, dodecylbenzenesulfonate salts, laurate salts and polyoxyethylene alkyl ether sulfate salts.

As a nonionic surfactant, for example, there can be provided polyoxyethylene alkyl ethers, polyoxyethylene alkyl esters, polyoxyehylenesorbitan fatty acid esters, polyoxyethylene alkylphenyl ethers, polyoxyethylene alkyl amines and polyoxyethylene alkyl amides. The nonionic surfactants can be used separately or in combination.

In the embodiments of the present invention, the surface tension of ink is an index of the permeability of ink into a paper, particularly, the dynamic surface tension of ink within a short time period equal to or less than 1 second after the formation of the ink surface, and is different from the static surface tension of ink which is measured at or after saturation time. As a measurement method of the surface tension, any of methods capable of measuring the dynamic surface tension of ink within 1 second or less such as a conventional publicly-known method disclosed in Japanese Laid-Open Patent Application No. 63-031237, and a Wilhelmy suspended plate-type surface tension measuring apparatus can be used for the measurement in the present invention. The surface tension is preferably 40 mJ/cm² or less, more preferably 35 mJ/cm² or less for obtaining excellent fixation and drying properties of ink.

In regard to (6) polyol or glycol ether that contains 8 or more carbon atoms, it has been found that when 0.1% by weight to 10.0% by weight of partially water-soluble polyol and/or glycol ether having a solubility of 0.1% by weigh or greater and less than 4.5% by weight in water at 25 °C, such as (a) 2-ethyl-1,3-hexanediol (solubility: 4.2% (20 °C)) and (b) 2,2,4-trimethyl-1,3-pentanediol (solubility: 2.0% (25 °C)) is added per the total weight of recording ink, the wettability of the ink to a thermal element can be improved and the ejection stability and frequency stability of ink can be obtained even if only a small amount of the polyol or glycol ether is added.

The penetrant having a solubility of 0.1% by weigh or greater and less than 4.5% by weight in water at 25 °C has low solubility but has an advantage of very high permeability. Therefore, the combination of the penetrant with solubility 0.1% by weigh or greater and less than 4.5% by weight in water at 25 °C and another solvent or another surfactant allows producing ink with very high permeability.

It is preferable that ink according to the embodiments of the present invention contain a resin emulsion.

The resin emulsion has a continuous phase of water and a dispersion phase of resin component(s) as follows. As a resin component for the dispersion phase, there can be provided acrylic resins, vinyl acetate-based resins, styrene-butadiene-based resins, vinyl chloride-based resins, acryl-styrene-based resins, butadiene-based resins and styrene-based resins.

According to the embodiments of the present invention, it is preferable that the resin be a polymer having both a hydrophilic moiety and a hydrophobic moiety. In addition, the particle diameter of the resin component is not particularly limited if emulsion can be obtained. However, the particle diameter is preferably about 150 nm or less, more preferably about 5 nm to about 100 nm.

These resin emulsions can be obtained by mixing resin particles in water, with a.surfactant if necessary.

For example, emulsion of acrylic resin or styrene-acryl-based resin can be obtained by mixing a(n) (meth)acrylate ester or both a(n) (meth)acrylate ester and styrene, with a surfactant if necessary, in water. Normally, the mixing rate of the resin component(s) to the surfactant is preferably about 10:1 to about 5:1. If the content of the surfactant is less than the aforementioned quantity range, it may be difficult to obtain emulsion. On the other hand, if the content is over the aforementioned range, the water resisting property of ink may be degraded and the permeability of ink tends to degrade, which are not preferable.

The proportion of a resin as a component of the emulsion and water is 60 parts by weight to 400 parts by weight per 100 parts by weight of the resin, preferably in the range of 100 parts by weight to 200 parts by weight.

As commercially available resin emulsions, there are listed Microgel E-1002 and Microgel E-5002 (styrene-acrylic resin emulsions, produced by Nippon Paint Co., Ltd.), Boncoat 4001 (acrylic resin emulsion, produced by Dainippon Ink And Chemicals, Inc.), Boncoat 5454 (styrene-acrylic resin emulsion, produced by Dainippon Ink And Chemicals, Inc.), SAE-1014 (styrene-acrylic resin emulsion, produced by Nippon Zeon Co., Ltd.) and Saibinol SK-200 (acrylic resin emulsion, produced by Saiden Chemical Industry Co ., Ltd.).

In addition, the resin emulsion is contained so that the content of a resin component is preferably 0.1% by weight to 40% by weight, more preferably 1% by weight to 25% by weight, of ink.

Resin emulsion has thickening and agglomerating properties so as to suppress the penetration of a coloring component and to accelerate the fixation of ink on a recording medium. In addtion, a certain kind of resin emulsion forms a coating on a recording medium and improves the rub resistance of printing.

Further, a conventionally-known additive can be added in addition to the aforementioned pigment, solvent and surfactant.

For example, as a preservative and fungi-proofing agent, sodium dehydroactate, sodium sorbate, sodium 2-pyridinethiol-1-oxide, sodium benzoate, sodium pentachlorophenolate, and so on can be used in the present invention.

As a pH adjustor, any kind of substance can be used if the pH of ink can be adjusted to 7 or greater without adversely affecting prepared ink.

As examples of the pH adjustor, there are provided amines such as diethanolamine and triethanolamine, alkali metal hydroxides such as.lithium hydroxide, sodium hydroxide and potassium hydroxide, ammonium hydroxide, quaternary ammonium hydroxide, quaternary phosphonium hydroxide, and alkali metal carbonate such as lithium carbonate, sodium carbonate and potassium carbonate.

As chelating agents, for example, there are provided sodium ethylenediaminetetraacetate, sodium nitrilotriacetate, sodium hydroxyethylethylenediaminetriacetate, sodium diethylenetriaminepentaacetate and sodium uramildiacetate.

As anti-corrosive agents, for example, there are provided acidic sulfites, sodium thiosulfate, antimony thioglycollate, diisopropylammonium nitrite, pentaerythritol tetranitrate and dicyclohexylammonium nitrite.

When such prepared ink that contains, at least, a pigment, wetting agents, a polyol or glycol ether having 8 or more carbon atoms, an anionic or nonionic surfactant, a water-soluble organic solvent and water in which the concentration of the pigment is 6% by weight or greater and the ink viscosity is 8 cp or greater (25 °C) is used, a good color tone (with a sufficient color development property and sufficient color reproducibility), high image concentration and clear image quality with no feathering on letters or images can be obtained at the time of printing on a normal paper.

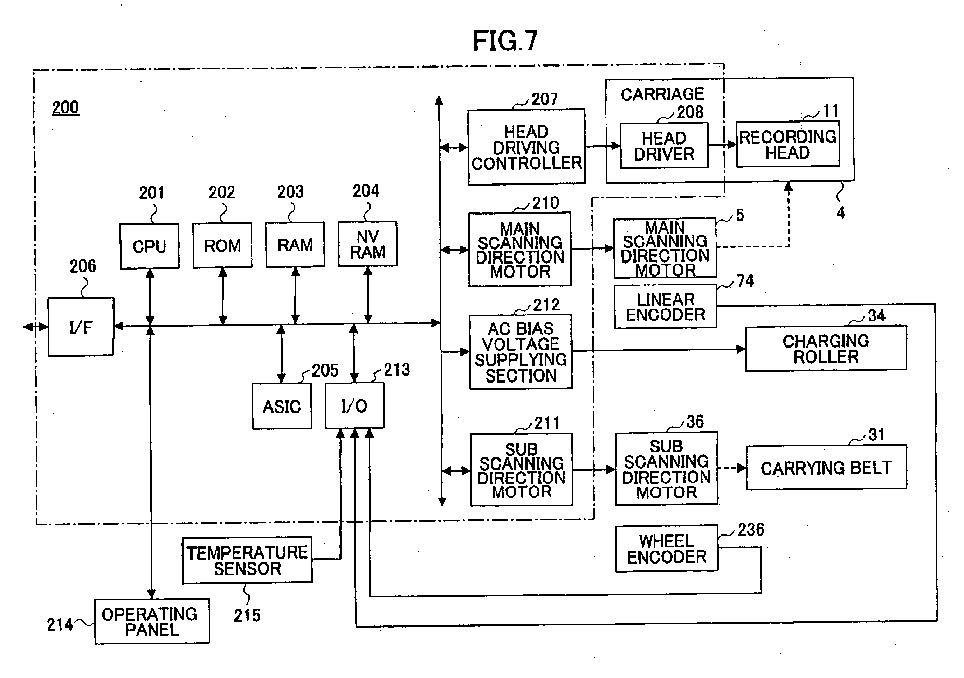

Next, a controlling section of the inkjet recording apparatus according to the embodiments of the present invention is explained. Fig. 7 is a block diagram showing a controlling section of the inkjet recording apparatus according to the embodiments of the present invention.

As shown in Fig. 7, a controlling section 200 of the inkjet recording apparatus includes a CPU 201 which controls all the elements in the inkjet recording apparatus, a ROM 202 in which a program executed by the CPU 201 and other fixed data are stored, a RAM 203 in which image data and other data are temporarily stored, a non-volatile memory (NVRAM) 204 which is a rewritable memory for storing data even when power to the apparatus is off, and an ASIC 205, which performs signal processing for image data, image processing such as order changing of data, and input and output signal processing for controlling the entire apparatus.

Further, the controlling section 200 includes an I/F 206, a head driving controller 207, a head driver 208, a main scanning direction motor driver 210, a sub scanning direction motor driver 211, an AC bias voltage supplying section 212, and an I/O 213. The I/F 206 receives/transmits data and signals from/to a host. The head driving controller 207 controls the driving of the recording head 11 by including a data transferring unit to the recording head 11. The head driver 208 (driver IC) drives the recording head 11 in the carriage 4. The main scanning direction motor driver 210 drives the main scanning direction motor 5. The sub scanning direction motor driver 211 drives the sub scanning direction motor 36. The AC bias voltage supplying section 212 supplies an AC bias voltage to the charging roller 34. To the I/O 213, pulses detected by a linear encoder 74 and a wheel encoder 236, a signal detected by a temperature sensor 215 which detects an ambient temperature, and signals detected by other sensors (not shown) are input. An operating panel 214 which necessary information is input to and is displayed on is connected to the controlling section 200.

The controlling section 200 receives print data and so on from the host such as an information processing apparatus like a personal computer, an image reading apparatus like an image scanner, and an image taking apparatus like a digital camera at the I/F 206 via a cable or a network.

The CPU 201 in the controlling section 200 analyzes image data by reading the data from a receiving buffer in the I/F 206, causes the ASIC 205 to perform necessary image processing and change the order of data, and transfers the processed image data to the head driver 208 via the head driving controller 207. Generation of dot pattern data for outputting an image can be performed by storing font data in the ROM 202 or can be obtained from a printer driver in the host in which the image data are transformed into bit map data.

The head driving controller 207 transfers the image data as serial data to the head driver 208 and also outputs a transferring clock, a latch signal, a control signal, and so on which are necessary for transferring the image data and confirming the transfer to the head driver 208. In addition, the head driving controller 207 includes a D/A converter which converts digital pattern data of driving pulses read out from the ROM 202 by the CPU 201 into analog data and a driving waveform generator composed of an amplifier and so on, and outputs a driving waveform composed of one driving pulse (driving signal) or plural driving pulses to the head driver 208.

The head driver 208 drives the recording head 11 by selectively applying driving pulses of which a driving waveform is composed given from the head driving controller 207 based on serially input image data corresponding to one line of the recording head 11 to the piezoelectric element 121 (actuatcr) of the recording head 11.

The main scanning direction motor driver 210 drives the main scanning direction motor 5 via an internal motor driver by calculating a control value based on a target value given from the CPU 201 and a speed detecting value obtained by sampling detection pulses from the linear encoder 74.

Similarly, the sub scanning direction motor driver 211 drives the sub scanning direction motor 36 via an internal motor driver by calculating a control value based on a target value given from the CPU 201 and a speed detecting value obtained by sampling detection pulses from the wheel encoder 236.

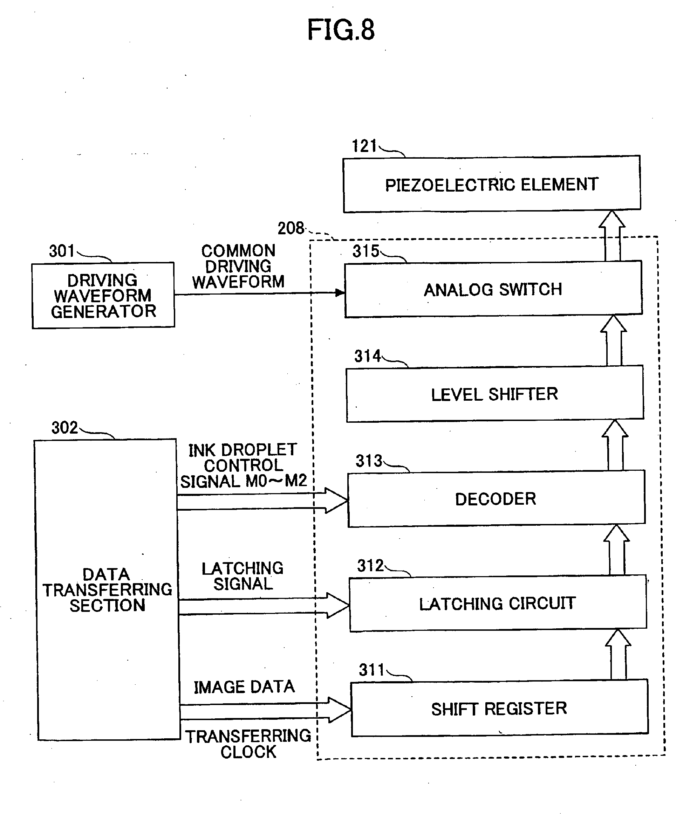

Next, referring to Fig. 8, the head driving controller 207 and the head driver 208 are explained. Fig. 8 is a block diagram showing a part of the head driving controller 207 and the head driver 208 shown in Fig. 7.

As shown in Fig. 8, the head driving controller 207 includes a driving waveform generator 301 which generates a driving waveform (common driving waveform) composed of plural driving pulses (driving signals) in one ink droplet ejecting cycle and outputs the driving waveform, and a data transferring section 302 which outputs image data (print data), a transferring clock, a latching signal, and ink droplet control signals M0 to M3. The ink droplet control signals M0 to M3 instruct opening and closing of an analog switch 315 of the head driver 208 every ink droplet. Each of the ink droplet control.signals M0 to M3 is selected corresponding to an ejecting cycle of the common driving waveform and becomes an H level when selected, and becomes an L level when not selected.

The head driver 208 includes a shift register 311, a latching circuit 312, a decoder 313, a level shifter 314, and the analog switch 315. To the shift register 311, the transferring clock (shift clock) and serial image data from the data transferring section 302 are input. The latching circuit 312 latches each register value of the shift register 311 by a latching signal. The decoder 313 decodes the image data and the ink droplet control signals M0 to M3 and outputs the decoded results. The level shifter 314 shifts the level of a logic level voltage signal of the decoder 313 to a level by which the analog switch 315 can be operated. The analog switch 315 is opened or closed by an output from the decoder 313 given via the level shifter 314.

The analog switch 315 is connected to the individual electrode 153 (selection electrode) of the piezoelectric element 121, and the common driving waveform is input from the driving waveform generator 301 to the analog switch 315. Therefore, the analog switch 315 becomes ON corresponding to the decoded results of serial image data and the ink droplet control signals M0 to M3 decoded by the decoder 313, and a desired driving signal in the common driving waveform is passed (selected) and the desired driving signal is applied to the piezoelectric element 121.

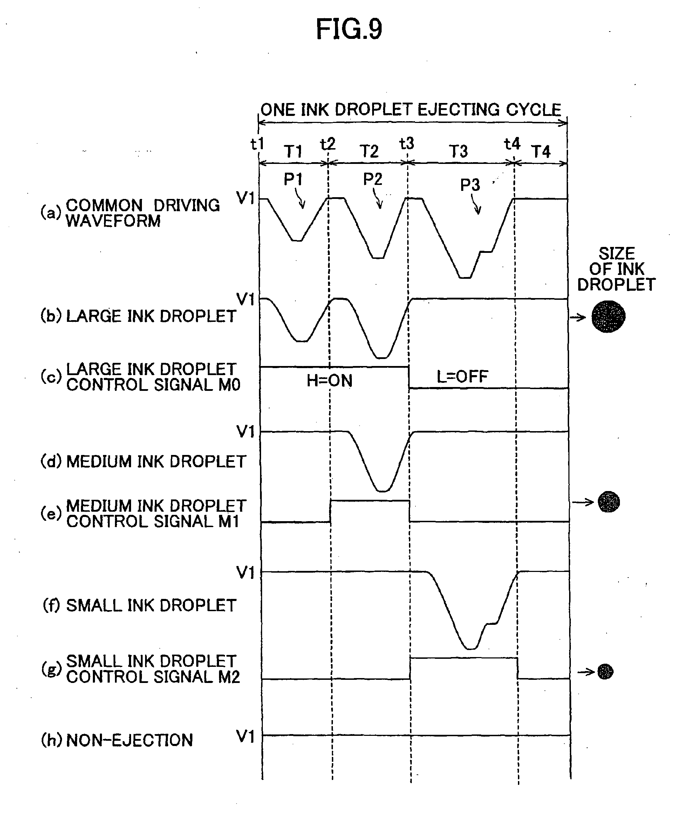

Next, referring to Fig. 9, an operation of the head driver 208 is explained. Fig. 9 is a timing diagram showing the operation of the head driver 208 shown in Fig. 8.

First, as shown in Fig. 9 (a), the driving waveform generator 301 outputs a common driving waveform including plural pulses (driving signals) P1, P2, and P3 in one ink droplet ejecting cycle. That is, the common driving waveform falls from the reference voltage (electric potential) V1 (the volume of the liquid chamber 106 is expanded), after the passage of a predetermined holding time, the common driving waveform rises toward the reference voltage V1 (the volume of the liquid chamber 106 is decreased), and these are continued.

A large ink droplet is formed by causing the pulses P1 and P2 to eject two ink droplets and to integrate the two ink droplets while they are flying (airborne). In addition, a medium ink droplet is ejected by causing the falling voltage of the pulse P2 to be set lower than that of the pulse P1, by using only the pulse P2. Further, a small ink droplet is ejected by causing the falling voltage of the pulse P3 to be set lower.than that of the pulse P2 and by causing the voltage of the pulse P3 to rise with a step, by using only the pulse P3.

When the large ink droplet is selected, as shown in Fig. 9 (b) and (c), the driving waveform generator 301 outputs a large ink droplet control signal M0 which becomes an H level in the periods T1 and T2 corresponding to the pulses P1 and P2. When the medium ink droplet is selected, as shown in Fig. 9 (d) and (e), the driving waveform generator 301 outputs a medium ink droplet control signal M1 which becomes an H level in the period T2 corresponding to the pulse P2. When the small ink droplet is selected, as shown in Fig. 9 (f) and (g), the driving waveform generator 301 outputs a small ink droplet control signal M2 which becomes an H level in the period T3 corresponding to the pulse P3. At the time of non-ejection, as shown in Fig. 9 (h), the common driving waveform is maintained in the reference voltage V1.

Therefore, corresponding to the image data transferred from the data transferring section 302, the large ink droplet, the medium ink droplet, the small ink droplet, and the non-ejection can be selected. That is, multi-level dots with four gradations can be formed from a large dot, a medium dot, a small dot, and non-ejection of a dot.

Next, an image processing apparatus is explained in which apparatus a program causing a computer to execute an image processing method that transfers image data to an image forming apparatus is installed. The image processing apparatus is a host computer, and in some cases, the program is referred to as a printer driver.

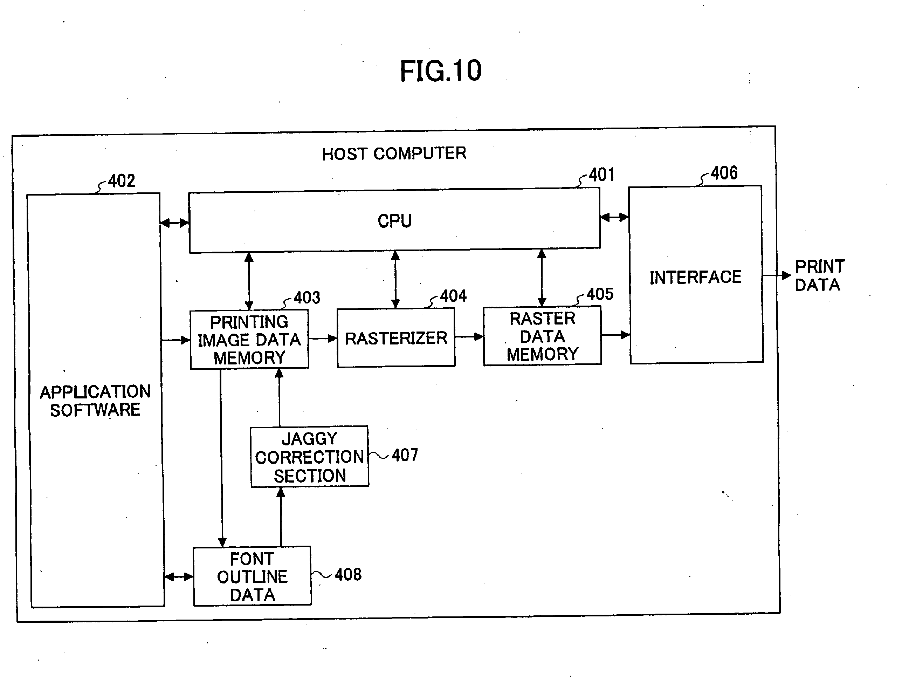

Fig. 10 is a block diagram showing the image processing apparatus in which the program (printer driver) of the image processing method according to the embodiments of the present invention is installed.

The image forming apparatus according to the embodiments of the present invention does not have a function which generates a dot pattern of an image and/or a letter that is actually printed on a recording medium by receiving a print command. Therefore, the image processing apparatus (host computer) generates data of a dot pattern by the printer driver and transfers the data to the image forming apparatus.

That is, in the image processing apparatus (host computer), a print command from application software in the host computer is processed by the printer driver (software) according to the embodiments of the present invention and is rasterized into printing dot pattern data and the printing dot pattern data are transferred to the image forming apparatus. Then the image forming apparatus prints an image and/or a letter.

As shown in Fig. 10, the image processing apparatus (host computer) includes a CPU 401 (main controller), application software 402, a printing image data memory 403, a rasterizer 404, a raster data memory 405, an interface 406, a jaggy correcting section 407, and font outline data 408.

Specifically, a print command of an image or a letter from the application software 402 which is executed by the CPU 401 or from an operating system is temporarily stored in the printing image data memory 403. In the print command, for example, the position, the boldness, the shape, and so on of a line to be printed, are described; further, the font, the size, the position, and so on of a letter to be printed are described. The print command is written in a specific print language.

The print command stored in the printing image data memory 403 is transformed into a recording dot pattern by the interpretation of the rasterizer 404. For example, when the print command is for a line, the print command is transformed into a recording dot pattern corresponding to the designated position, boldness, shape, and so on of the line. When the print command is for a letter, the print command is transformed into a recording dot pattern corresponding to the designated position, size, font, and so on of the letter, by reading letter outline information corresponding to the letter from the font outline data 408 stored in the host computer. The transformed recording dot pattern is stored in the raster data memory 405.

At this time, the host computer rasterizes the print command into the recording dot pattern data by setting the existing orthogonal lattice to the reference recording position. The recording dot pattern data stored in the raster data memory 405 is transferred to the inkjet recording apparatus (image forming apparatus) via the interface 406 as printing data. When the recording dot pattern data are generated, the recording dot pattern data are converted into jaggy corrected data by the jaggy correcting section 407.

Next, jaggy correction which is executed by the printer driver in the image processing method according to the embodiments of the present invention is explained. In the jaggy correction, dots near/at a step-shaped changing part of a letter or graphics, by which an outline part (contour part) of the letter or the graphics of an image is formed, are formed by smaller dots than dots by which parts other than the step-shaped changing part are formed. Or the dots near/at the step-shaped changing part of the letter or the graphics are converted into smaller dots.

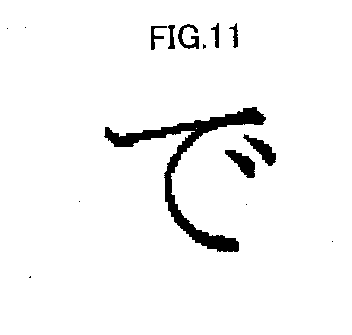

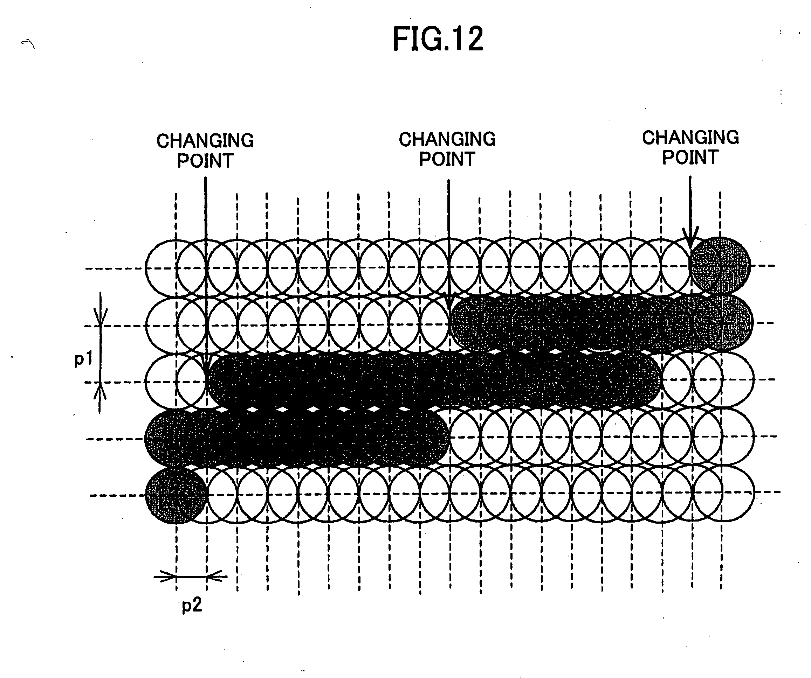

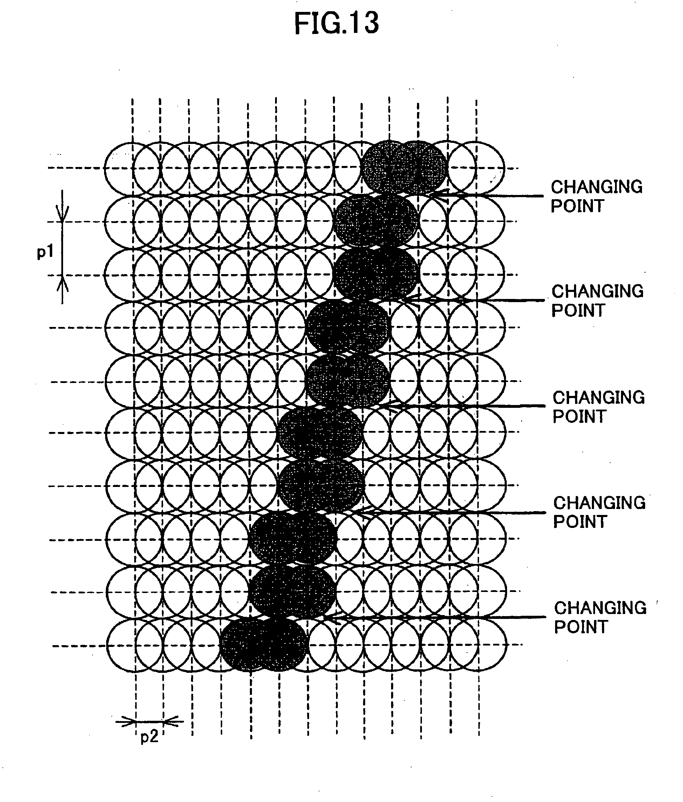

First, referring to Figs. 11 through 13, a case which does not use the jaggy correction is explained. Fig. 11 is a diagram showing a letter printed by using dot data obtained in an image process which does not use the jaggy correction. Fig. 12 is a diagram showing dot positions of a slanting line of the letter shown in Fig. 11 nearly parallel to the main scanning direction. Fig. 13 is a diagram showing dot positions of a slanting line of the letter shown in Fig. 11 nearly parallel to the sub scanning direction.

In this case, in the sub scanning direction (second direction), the resolution of the image is the same resolution of the nozzle pitch p1 (in this case, 300 dpi), and in the main scanning direction (first direction), the resolution of the image is higher than that in the sub scanning direction (in this case, 600 dpi which is twice that in the sub scanning direction).

As shown in Fig. 12, changing points in which dots are disposed in a step shape occur at the slanting line, and level difference of one dot occurs at each changing point. In this case, as shown in Fig. 13, at the slanting line nearly parallel (vertical line in Fig. 13) to the sub scanning direction, since the step-shaped changing part changes by 600 dpi, the jagginess is not noticeable. However, as shown in Fig. 12, at the slanting line nearly parallel (horizontal line in Fig. 12) to the main scanning direction, since the step-shaped changing part changes by 300 dpi, the jagginess is noticeable, and the letter quality becomes extremely low.

In Fig. 12, in the changing degree of the slanting line, the slanting line changes one dot every four dots in a step shape (2 dots in the 600 dpi direction signifies 1 dot in the 300 dip direction). In Fig. 13, the slanting line changes four dots every one dot in a step shape. In Figs. 12 and 13, cases where the slanting lines rise are shown. In Fig. 12, the slanting line is called a 1/4 slanting line, and in Fig. 13, the slanting line is called a 4/1 slanting line.

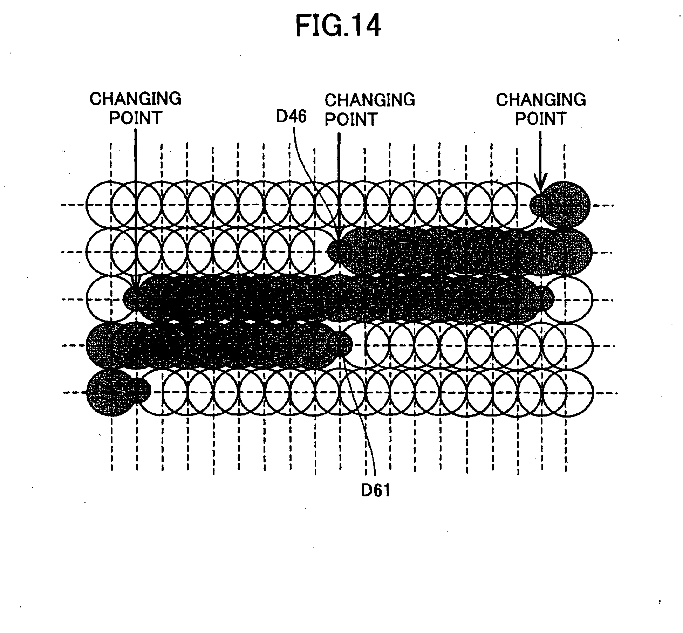

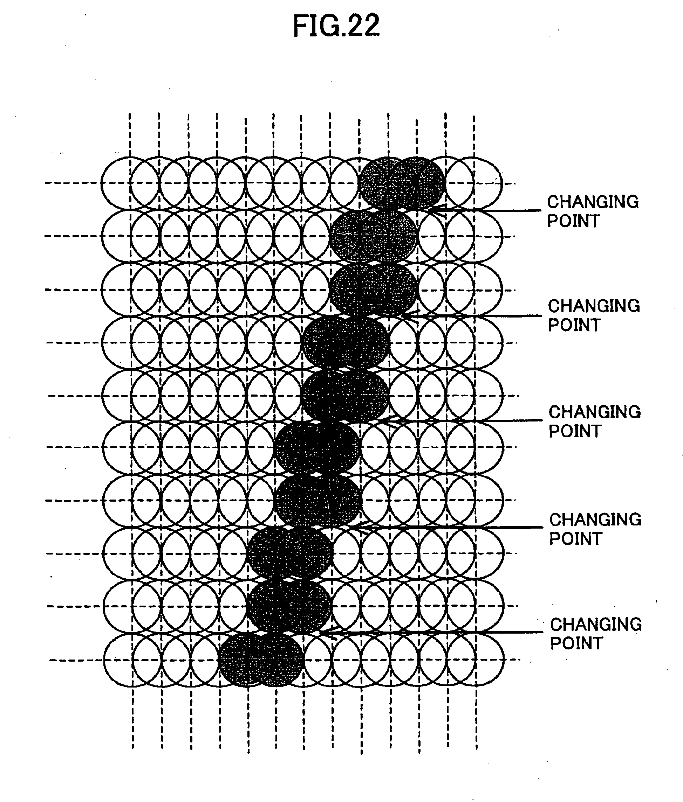

Next, referring to Figs. 14 through 22, examples of the jaggy correction in a first embodiment of the present invention are explained. In Figs. 14 through 21, a first through an eighth examples of the jaggy correction are shown, respectively; in addition, the jaggy correction is applied to the 1/4 slanting line. As shown in Figs. 14 through 21, the jaggy correction is applied to a slanting line of a letter to be printed nearly parallel to the main scanning direction. Fig. 22 is a diagram showing dot positions of the slanting line of the letter to be printed nearly parallel to the sub scanning direction according to the first embodiment of the present invention. As shown in Fig. 22, in the first embodiment, the jaggy correction is not applied to the slanting line of the letter to be printed nearly parallel to the sub scanning direction.

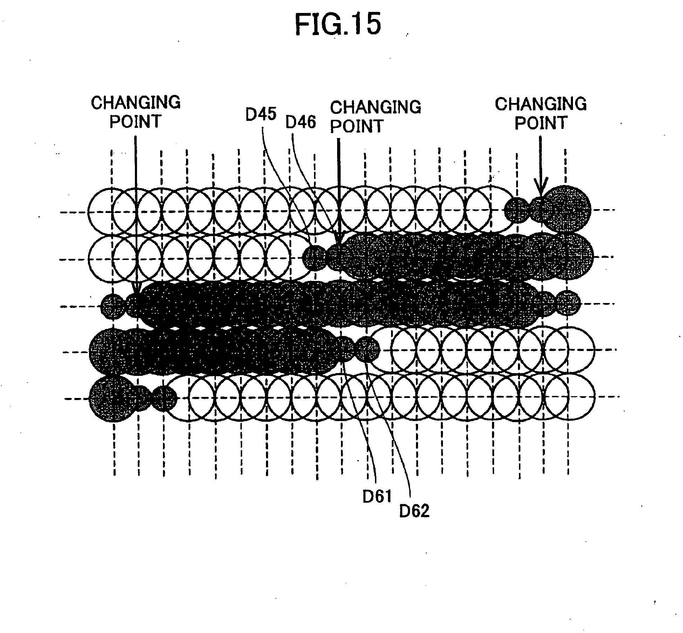

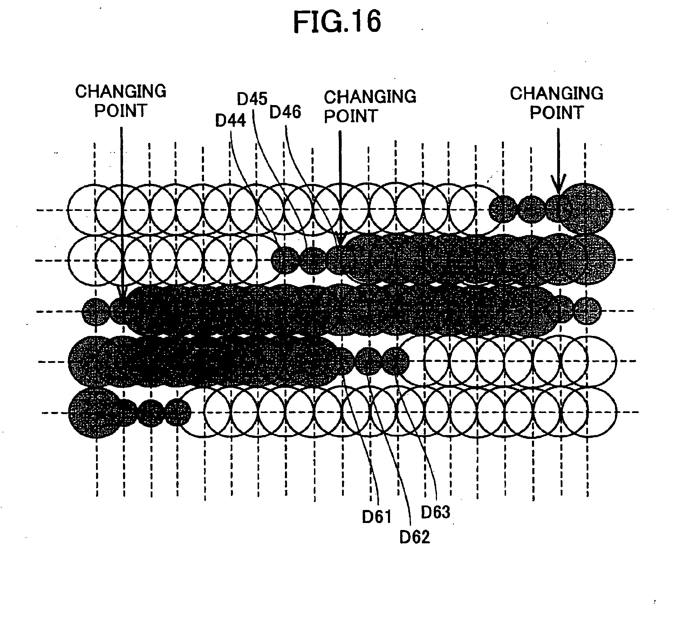

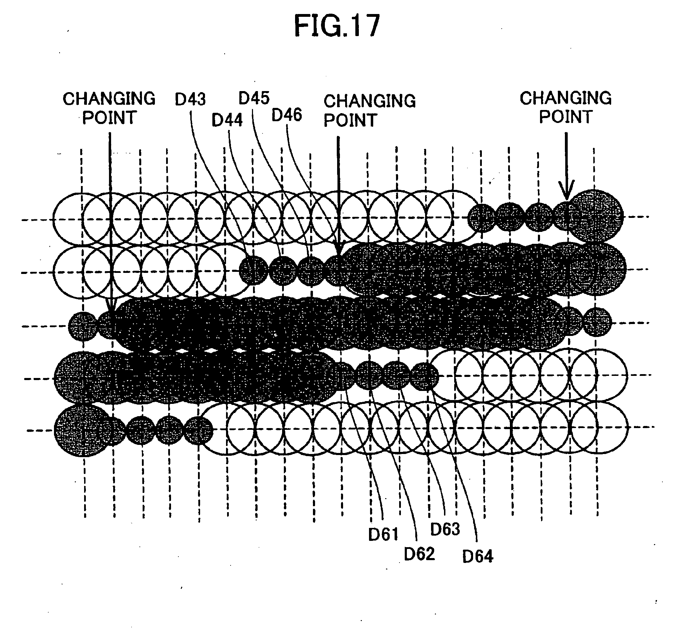

In the first through fourth examples shown in Figs. 14 through 17, small ink droplet dots are added to blank parts of the step-shaped changing parts of the changing points. In the first example shown in Fig. 14, small ink droplet dots are added to blank parts (for example, dots at D46 and D61) of the changing points. In the second example shown in Fig. 15, small ink droplet dots are added to blank parts (for example, two dots at D45 and D46, and two dots at D61 and D62) near and at the changing points. In the third example shown in Fig. 16, small ink droplet dots are added to blank parts (for example, three dots at D44, D45, and D46, and three dots at D61, D62, and D63) near and at the changing points. In the fourth example shown in Fig. 17, small ink droplet dots are added to blank parts (for example, four dots at D43, D44, D45, and D46, and four dots at D61, D62, D63, and D64) near and at the changing points.

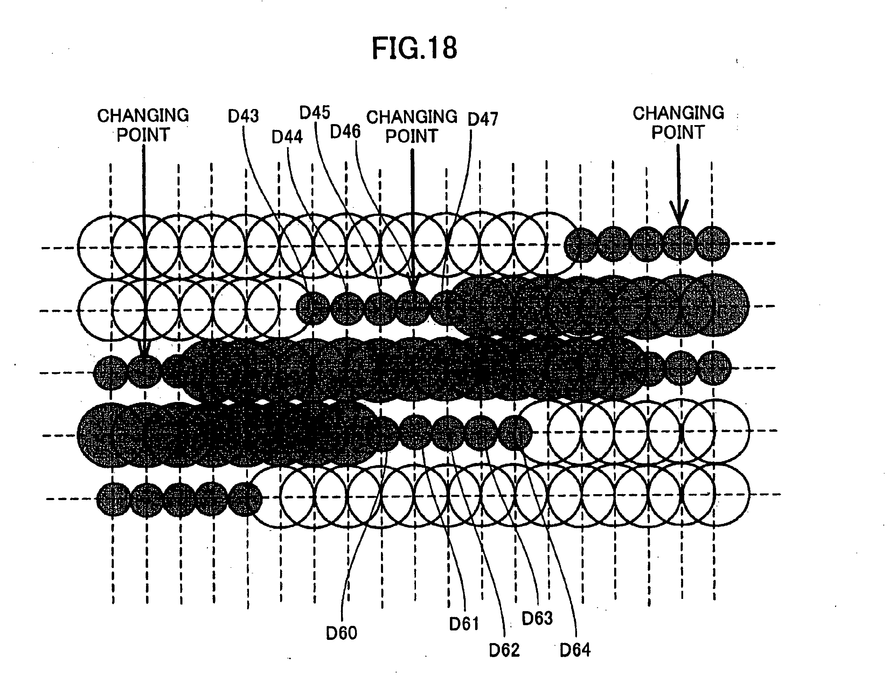

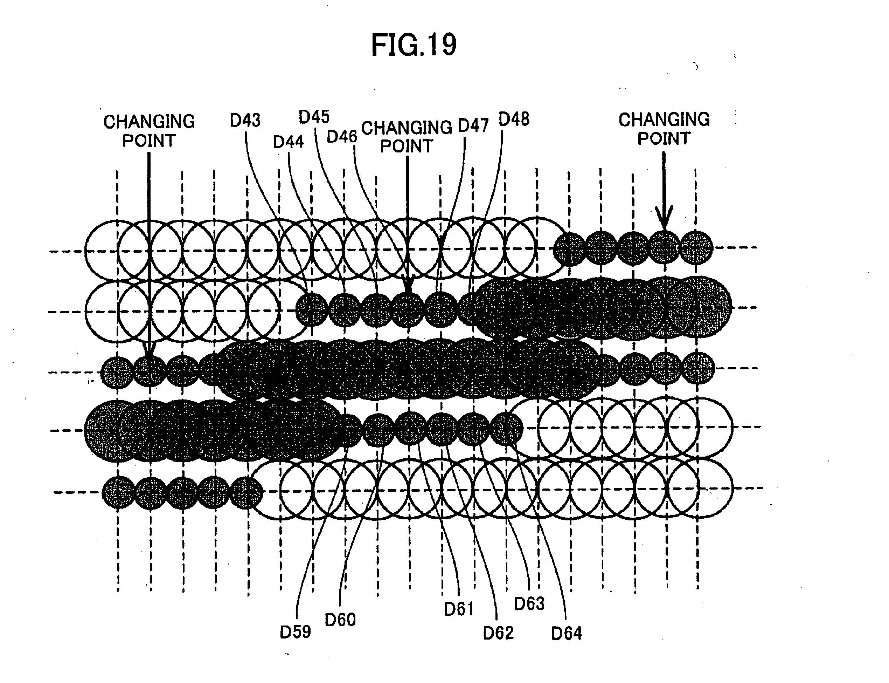

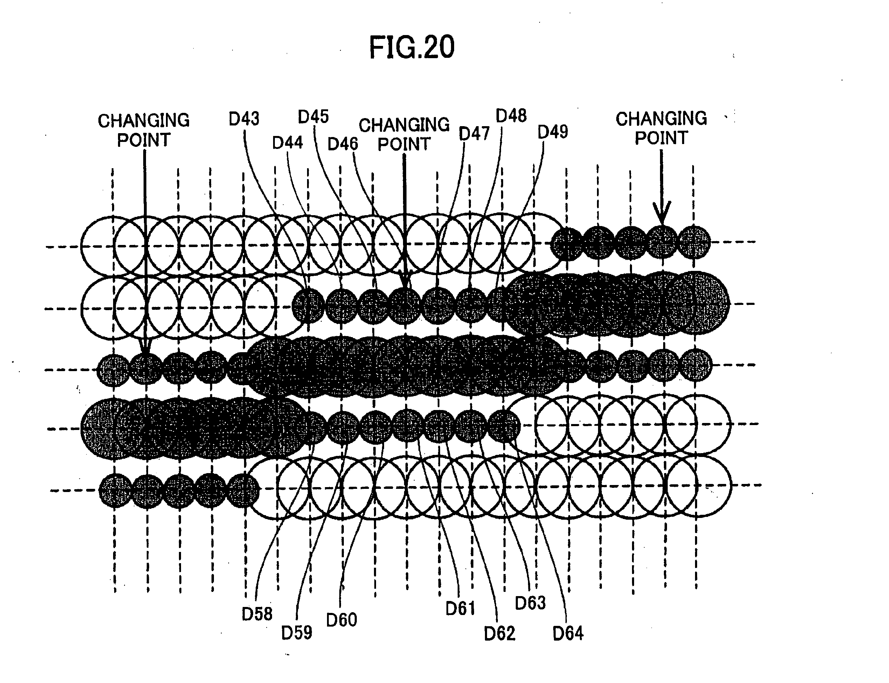

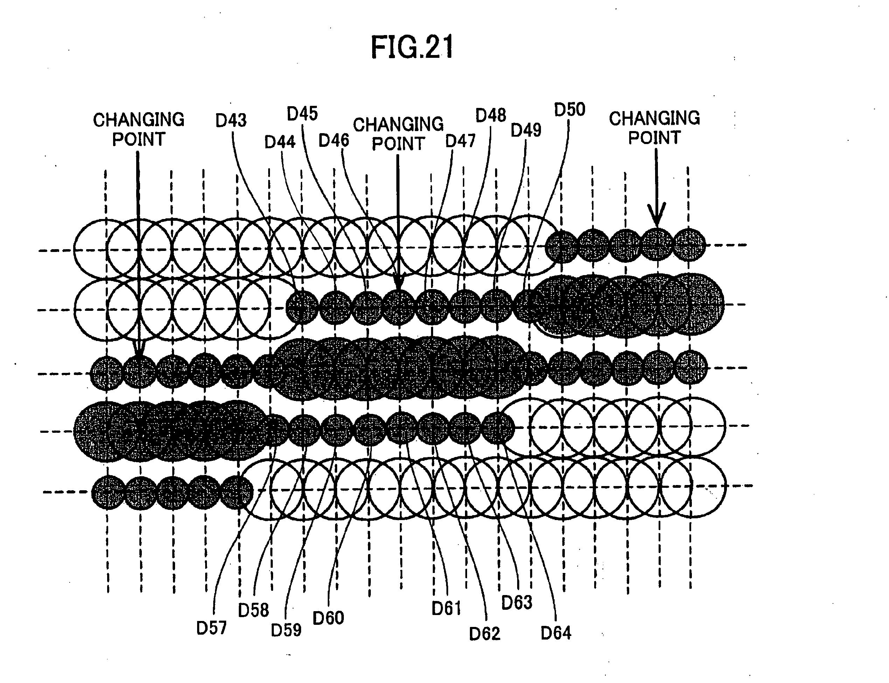

In addition, in the fifth through eighth examples shown in Figs. 18 through 21, one or plural large ink droplet dots behind and before the changing point dot are converted into one or plural small ink droplet dots from the fourth example shown in Fig. 17. In the fifth example shown in Fig. 18, large ink droplet dots are converted into small ink droplet dots (for example, dots at D47 and D60) behind and before the changing points. In the sixth example shown in Fig. 19, large ink droplet dots are converted into small ink droplet dots (for example, two dots at D47 and D48, and two dots at D59 and D60) behind and before the changing points. In the seventh example shown in Fig. 20, large ink droplet dots are converted into small ink droplet dots (for example, three dots at D47, D48, and D49 and three dots at D58, D59, and D60) behind and before the changing points. In the eighth example shown in Fig. 21, large ink droplet dots are converted into small ink droplet dots (for example, four dots at D47, D48, D49, and D50, and four dots at D57, D58, D59, and D60) behind and before the changing points.

As shown in Figs. 14 through 21, when the small ink droplet dots are formed near and at the step-shaped changing points, the level difference at the changing points is lowered by only using the small ink droplet dots and a relatively smooth slanting part can be formed. Further, in the inkjet recording apparatus, there is a characteristic that ink runs into the paper after hitting the paper. In a case where an image is printed on a normal paper, when ink which is mainly made of dyes is used, the jagginess is lowered by adding small ink droplet dots; however, outline parts becomes rough caused by feathering and the effect by the jaggy correction is lowered. However, in the present embodiment, since ink is mainly made of pigments whose viscosity is high, the feathering is lowered, and a high quality image can be formed. Further, by the ink according to the present embodiment, the feathering is lowered, but running of ink slightly occurs; therefore, the outline part is smoothed and the jagginess is not noticeable. Therefore, according to the present embodiment, a smooth slanting line in which the jagginess is hardly noticeable can be formed.

In the present embodiment, the examples of the 1/4 slanting line are described. However, the present embodiment can be applied to a slanting line other than the 1/4 slanting line, for example, to a 1/3 slanting line and a 1/5 slanting line. Further, the present embodiment can be applied to slanting lines inverted from the above lines by a mirror, and the same effects as in the above can be obtained.

Further, as shown in Fig. 22, since the jaggy correction is not applied to the slanting line of the letter to be printed nearly parallel to the sub scanning direction, the dot structure is the same as that shown in Fig. 13.

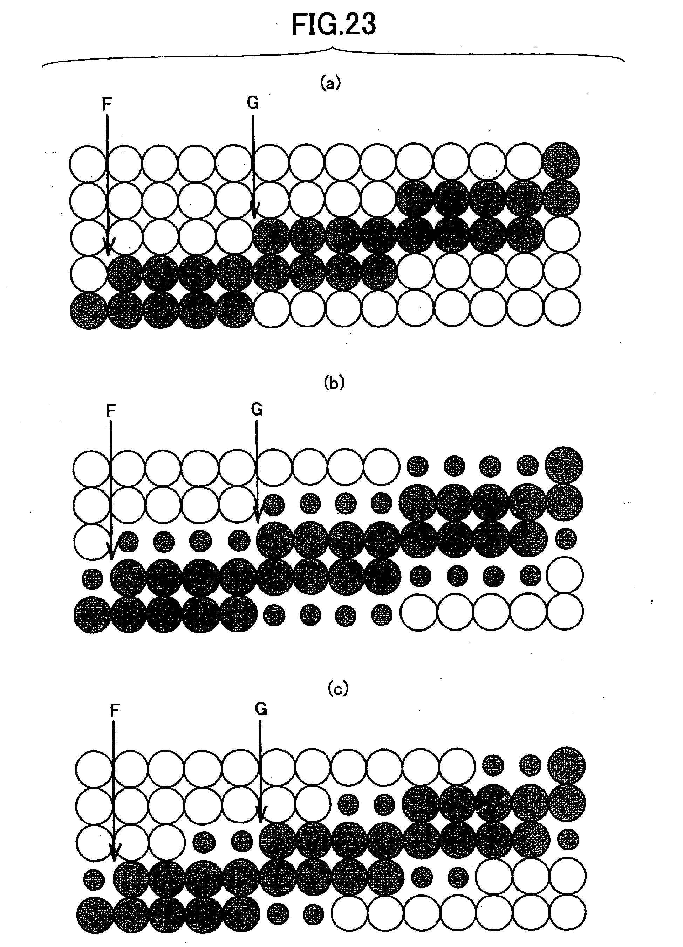

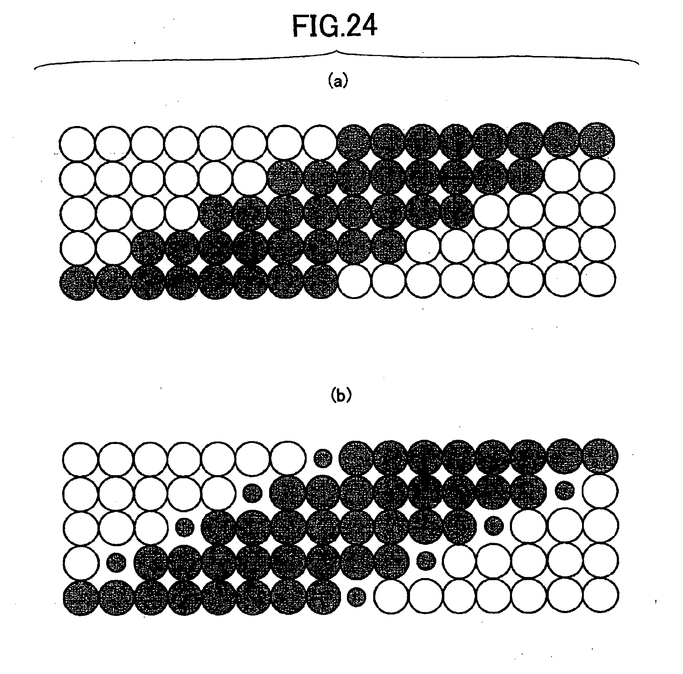

Next, referring to Figs. 23 and 24, other examples of the jaggy correction in the first embodiment of the present invention are explained. Fig. 23 is a diagram showing a first different example which the jaggy correction is applied to a slanting line of a letter to be printed nearly parallel to the main scanning direction according to the first embodiment of the present invention. Fig. 24 is a diagram showing a second different example which the jaggy correction is applied to a slanting line of a letter to be printed nearly parallel to the main scanning direction according to the first embodiment of the present invention. In Figs. 23 and 24, the main scanning direction is represented twice so as to show the dot structure. That is, the pitch between adjacent two dots shown by the same interval is 600 dpi in the main scanning direction and 300 dpi in the sub scanning direction on an actual recording medium.

First, in Fig. 23, (a) shows a case in which the number of dots that form a straight line between two step-shaped changing parts F and G is four in the main scanning direction, when this is converted into 300 dpi equal to the sub scanning direction, the number of dots can be two; therefore, this is a 1/2 slanting line. As shown in Fig. 23 (b), when four small ink droplet dots are added to blank parts between the changing points F and G, the step-shaped changing part can be smoothened.

As shown in Fig. 23 (c), when only two small ink droplet dots are added to blank parts before the changing points F and G (that is, the number of dots in a straight line between step-shaped changing parts - 2 are added), the step-shaped changing part can be made more smooth. With this, even in the 1/2 slanting line, a slanting line whose jagginess is lowered can be obtained. In the case of a 2/1 slanting line, the jaggy correction is not applied; therefore, small ink droplet dots are not added.

Next, in Fig. 24, (a) shows a case in which the number of dots that form a straight line between two step-shaped changing parts is two in the main scanning direction, when this is converted into 300 dpi equal to the sub scanning direction, the number of dots can be said one; therefore, this is a 1/1 slanting line. That is, when the line is actually printed on a recording medium, the line represents a slanting line of 45 degrees. In the 1/1 slanting line, since the step-shaped part continues, the jagginess is hardly noticeable. In the case of the inkjet recording apparatus, since the step-shaped parts are smoothened by the expansion and slight running of ink, small ink droplet dots do not need to be added. Therefore, a bad effect caused by applying the jaggy correction to the 1/1 slanting line can be avoided. However, as shown in Fig. 24 (b), one small dot can be added to each blank part.

As described above, in the present embodiment, various jaggy correcting methods are applied corresponding to the slant of the step-shaped changing parts, that is, predetermined dots are added to the slanting line (predetermined blank parts are converted into predetermined dots in the slanting line) corresponding to the slant of the outline parts of a letter. With this, the most suitable jaggy correction can be applied corresponding to the outline of the letter which is formed by gathering plural slanting lines and straight lines, and a high-quality letter can be formed.

Next, in the jaggy correction, a method is explained which method forms a dot of a smaller size near/at a step-shaped changing part than a dot at the step-shaped changing part. The dot of the smaller size is not limited to a dot formed by a small ink droplet, and can be a dot whose size is smaller than that at the step-shaped changing part. The method includes adding a smaller dot and converting a blank part into a smaller dot.

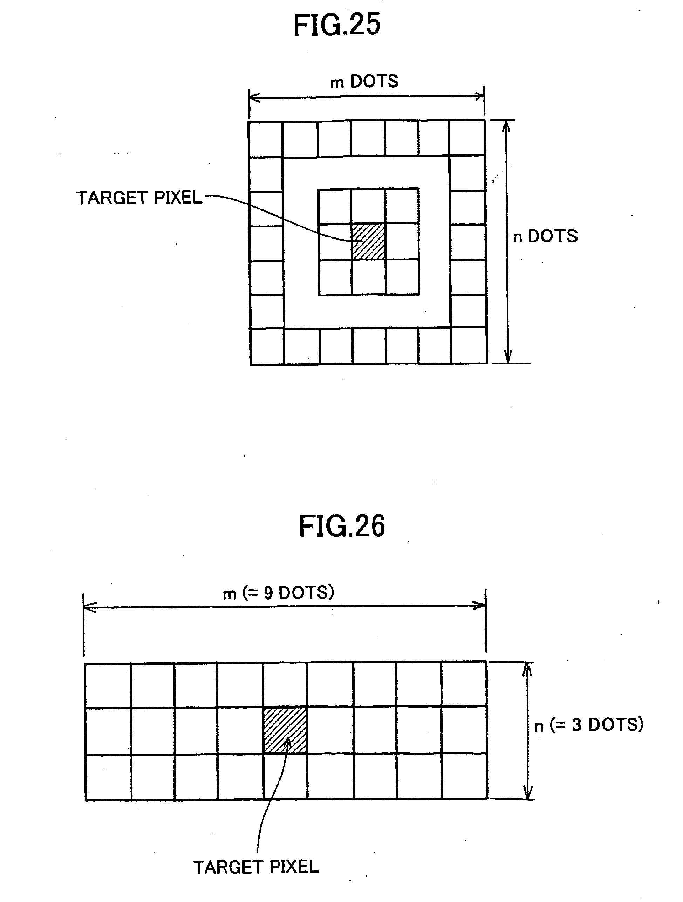

As the method adding the smaller dot or converting the blank part into the smaller dot, a pattern matching method can be used as an excellent method. Fig. 25 is a diagram showing a general window which is used in the pattern matching method. The window is a filter from which image data to be processed are extracted, and image data at a dot position corresponding to a dot structure showing in the window are extracted. The window size is composed of "m" dots in the horizontal direction and "n" dots in the vertical direction.

In the image processing method according to the present invention, the jaggy correction is applied to a slanting line nearly parallel to the main scanning direction and is not applied to a slanting line nearly parallel to the sub scanning direction. Therefore, the number of dots "m" in the horizontal direction is different from the number of dots "n" in the vertical direction corresponding to the resolutions in the main scanning direction and the sub scanning direction. That is, the number of dots in the high resolution direction is larger than that in the low resolution direction.

That is, when an image is formed by using different resolutions between the main scanning direction (first scanning direction) and the sub scanning direction (second scanning direction), the values of "m" and "n" are different. In order to easily detect step-shaped changing points of a slanting line near the horizontal line and blank dots (parts) close to the slanting line, "m" is selected to be a large value. On the other hand, since blank dots close to the slanting line near the vertical line of the step-shaped changing points do not need to be detected, "n" is a small value. Especially, in a case where the jaggy correction is not needed in a slanting line near the vertical line, it is enough that the value "n" be three in the sub scanning direction; therefore, the number of dots to be processed can be reduced.

In the present embodiment, as shown in Fig. 26, a dot near the step-shaped changing point is detected by using a window of 9 × 3, that is, "m" = 9, and "n" = 3.

Font data of a letter are expanded into bit map data by the printer driver (program). The bit map data show dots by which the font is formed. The pattern matching method is applied to each dot in the bit map data in the above window unit.

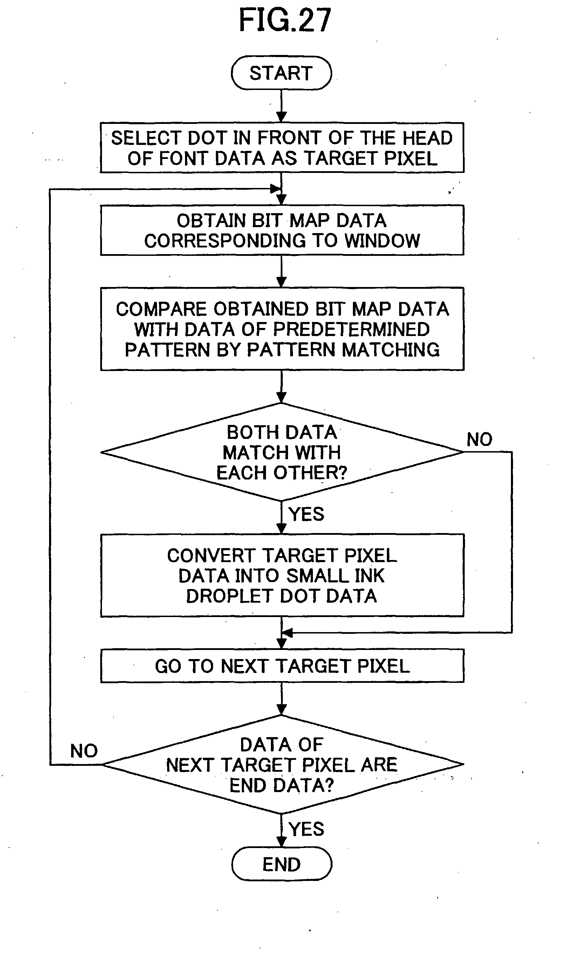

Next, referring to Fig. 27, a pattern matching process (method) (dot data converting process) which is executed by the printer driver is explained. Fig. 27 is a flowchart showing the pattern matching process according to the first embodiment of the present invention. In this, as the small dot, the small ink droplet dot is used.

First, a dot positioned in front of the head of font data is selected as a target pixel. Next, bit map data of the font data corresponding to a window are obtained by setting the target pixel as the center. The bit map data obtained at this time are data of 27 dots (9 dots × 3 dots).

Next, the obtained bit map data are compared with data of a predetermined pattern .(reference pattern) by the pattern matching method. The reference pattern is a dot addition pattern or a small dot conversion pattern. When both the data are matched with each other, the target pixel data are converted into small dot data. In this, the small dot data are small ink droplet dot data.

When both the data do not match with each other, the process goes to a next target pixel (before or behind the target pixel). In addition, when the target pixel data are converted into the small ink droplet data, the process goes to a next target pixel. Then, it is determined whether data of the next target pixel are end data, when the data of the next target pixel are not the end data, the process continues until data of a succeeding target pixel become the end data.

In the above process, one pixel can be handled as one byte data or one bit data. When the one pixel is the one byte data, 27 bytes are needed to express data of 27 dots; however, when the one pixel is the one bit data, only 4 bytes are needed (1 byte = 8 bits). Therefore, when the one pixel is the one bit data, the amount of data to be processed is small, the capacity of memory can be reduced, and the processing speed can be high.

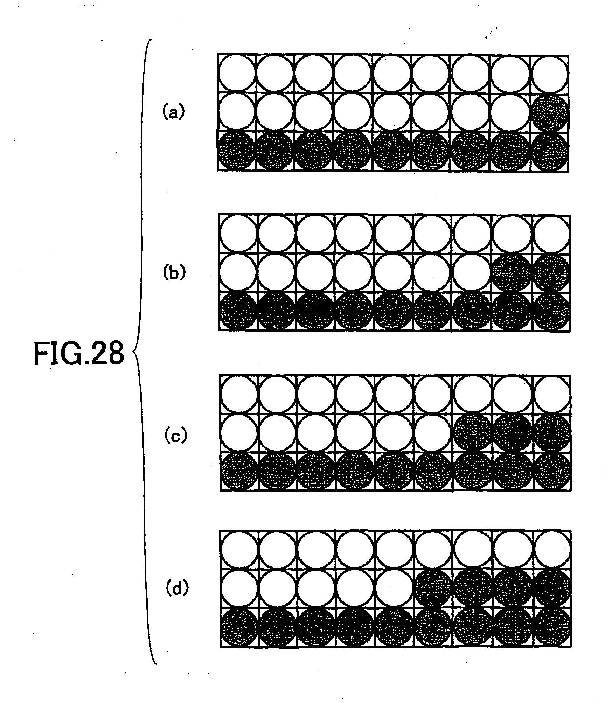

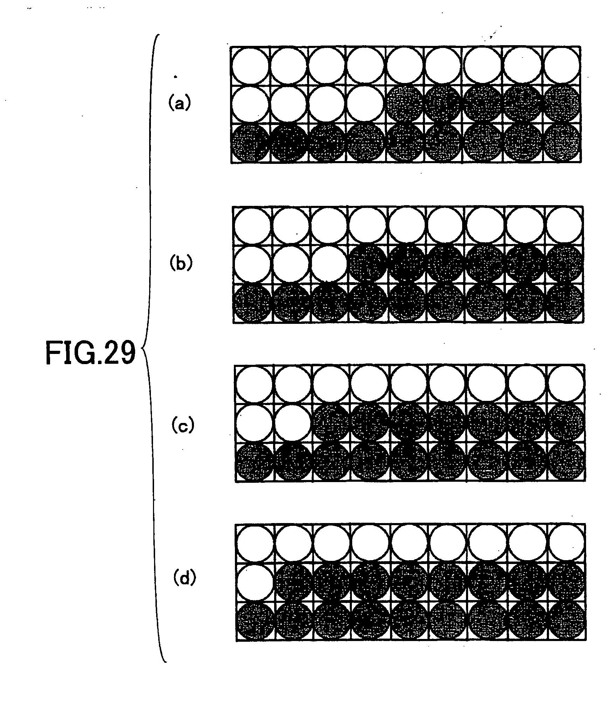

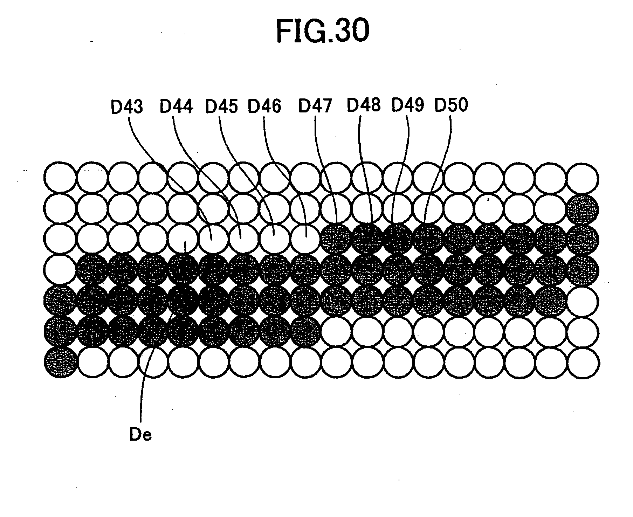

Referring to Figs. 28 through 30, the above process is explained in detail. Fig. 28 is a diagram showing reference patterns which are used to convert blank dots (parts) into small dots in the pattern matching process. Fig. 29 is a diagram showing reference patterns which are used to convert image dots (print data) into small dots in the pattern matching process. Fig. 30 is a diagram showing an example of dot data to which the pattern matching process is applied by using the reference patterns.

When a reference pattern shown in Fig. 28 (a) is used, a dot (data) at the pixel position (dot position) D43 shown in Fig. 30 can be converted into a small ink droplet dot. When a reference pattern shown in Fig. 28 (b) is used, a dot (data) at the pixel position (dot position) D44 shown in Fig. 30 can be converted into a small ink droplet dot. When a reference pattern shown in Fig. 28 (c) is used, a dot (data) at the pixel position (dot position) D45 shown in Fig. 30 can be converted into a small ink droplet dot. In addition, when a reference pattern shown in Fig. 28 (d) is used, a dot (data) at the pixel position (dot position) D46 shown in Fig. 30 can be converted into a small ink droplet dot.

Further, when a reference pattern shown in Fig. 29 (a) is used, an image dot (data) at the pixel position (dot position) D47 shown in Fig. 30 can be converted into a small ink droplet dot. When a reference pattern shown in Fig. 29 (b) is used, an image dot (data) at the pixel position (dot position) D48 shown in Fig. 30 can be converted into a small ink droplet dot. When a reference pattern shown in Fig. 29 (c) is used, an image dot (data) at the pixel position (dot position) D49 shown in Fig. 30 can be converted into a small ink droplet dot. In addition, when a reference pattern shown in Fig. 29 (d) is used, an image dot (data) at the pixel position (dot position) D50 shown in Fig. 30 can be converted into a small ink droplet dot.

In this, in a case where the small dot data are generated, when the original font data are expressed as 0 (blank) and 255 (print data) like the bit map data, or as 0 (blank) and 1 (print data) like binary data and when the font data are temporarily converted into 0 (blank) and 255 (print data), in the small dot data, the blank data and data forming a font can be converted into data expressing small dots, for example, 85, respectively. In addition, when the small dot data are processed as 0s and 1s, an additional memory whose size is the same as the size of the font data is installed, the "1" showing that the print data are formed at a position where a small dot is formed.

As described above, when small dots and large dots are printed by the font data (the former) formed by small dots and large dots generated by the pattern matching method, or by binary data (0,1) for small dots and the original binary font data (0,1) (the latter), a slanting line in which jagginess is reduced can be formed.

In addition, when the 9 × 3 dots window and the 9 × 3 dots reference patterns are used, it can be determined whether blank dots and image dots in a range of four dots before and behind the changing point are to be converted into small dots by setting the changing point as its center.

As described above, the conversion (addition) can be applied to dots in the range of four dots before and behind the changing point. When a dot De shown in Fig. 30 is set to be a target pixel, the changing point exists beyond the window and cannot be detected. In a case where it is attempted to add a small dot to the position of the dot De, when the sizes of the window and the reference patterns are set to 11 × 3 dots, a small dot can be added to the dot De. That is, when the size of the window and the size of the reference patterns are enlarged, a changing point near the horizontal line can be widely detected. With this, small dots corresponding to the slant can be added and the slanting line quality can be further increased.

In other words, the sizes of the window and the reference patterns are not limited to those in the present embodiment. The sizes are determined by the range of dots to which the addition or the conversion is applied and by a subject in which the process time meets the printing speed. In addition, when the sizes are enlarged, since the data size for the pattern matching becomes large, time which is required to execute the pattern patching becomes large. Therefore, when the process time is considered, it is preferable that the sizes be as small as possible. On the other hand, the number of dots, to which the addition (conversion) of a small dot is applied, is determined by letter quality by the jaggy correction. Therefore, an optimum size must be determined based on by the letter quality and the processing speed.

According to an experiment pertaining to an embodiment of the present invention, when the above ink was used, since the roughness among dots is reduced by the expansion of the ink, the letter quality was sufficiently increased by adding four small dots, preferably, six small dots. In addition, in the processing time, throughput of 10 PPM (pages per minute) or more was achieved. Therefore, as the size of the window, the size of m ≤ 13 by which six dots can be detected before and behind the changing point in the main scanning direction and of n = 3 in the sub scanning direction is suitable.

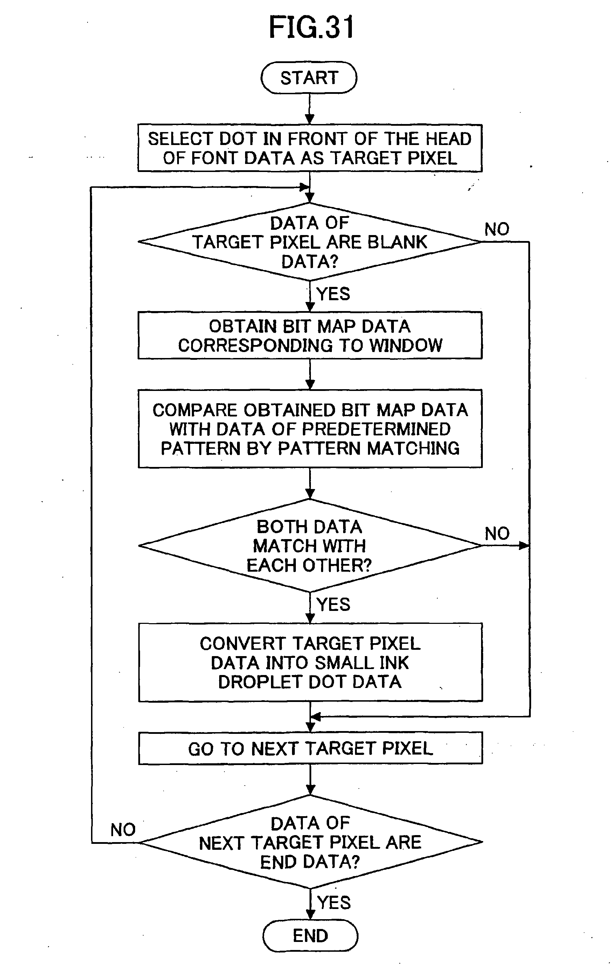

Next, referring to Fig. 31, a data forming process in which small ink droplet dots are only added to blank parts (dots) near the step-shaped changing part of a letter is explained. Fig. 31 is a flowchart showing a small ink droplet dot data forming process in blank parts (dots) according to the first embodiment of the present invention.

First, a dot positioned in front of the head of font data (print data) is selected as a target pixel. Next, it is determined whether data of the target pixel are blank data or font data (print data).

When data of the target pixel are blank data, a pattern matching process is applied, and bit map data of the font data corresponding to a window are obtained by setting the target pixel as the center. The bit map data obtained at this time are data of 27 dots (9 dots × 3 dots). Next, the obtained bit map data are compared with data of a predetermined pattern (reference pattern) by the pattern matching method. When both the data match with each other, the target pixel data are converted into small ink droplet dot data (small dot data).

When the data at the target pixel are not blank data, the process goes to a next target pixel (before or behind the target pixel). Then, it is determined whether data of the next target pixel are end data, when the data of the next target pixel are not the end data, the process continues until data of a succeeding target pixel become the end data. When the data of the succeeding target pixel are the end data, the process ends.

When both the data are not matched with each other, the process goes to a next target pixel (before or behind the target pixel). Then, it is determined whether data of the next target pixel are end data, when the data of the next target pixel are not the end data, the process continues until data of a succeeding next target pixel become the end data.

As described above, only when the data of the target pixel are the blank data, the pattern matching process is executed, and when the data of the target pixel are the font data, detection of a changing point by the pattern matching is not executed. Since time for the pattern matching is not needed for the font data, the processing time can be reduced.

In the above process, one pixel can be handled as one byte data or one bit data. When the one pixel is the one byte data, 27 bytes need to express data of 27 dots; however, when the one pixel is the one bit data, only 4 bytes need (1 byte = 8 bits). Therefore, when the one pixel is the one bit data, the amount of data to be processed is small, the capacity of memory can be reduced, and the processing speed can be high.

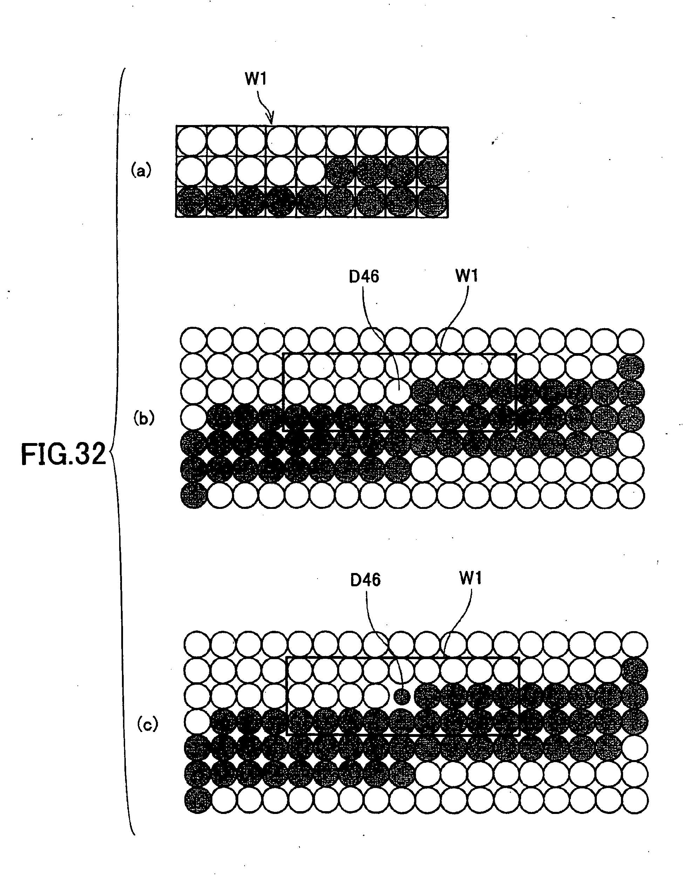

Next, referring to Fig. 32, the above process is explained in detail. Fig. 32 is a diagram showing an example of the small dot data forming process shown in Fig. 31. When a dot D46 of blank data shown in Fig. 32 (b) is selected as a target pixel by using a reference pattern W1 shown in Fig. 32 (a), since both the dot patterns are the same, as shown in Fig. 32 (c), data positioned at the target pixel D46 are converted from blank data into small ink droplet dot data. In this case, by using a window of 9 × 3 dots and the reference pattern of 9 × 3 dots, it is possible to determine whether a small ink droplet dot is added to four blank dots adjacent to the changing point.

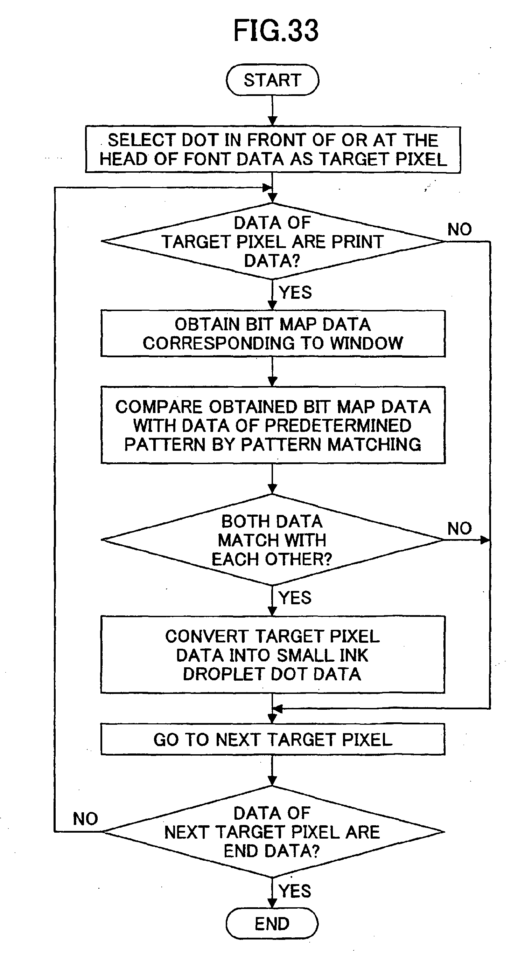

Next, referring to Fig. 33, a data forming process is explained in which process only font data (print data) near the step-shaped changing part of a letter are converted into small ink droplet dot data. Fig. 33 is a flowchart showing the small ink droplet dot data forming process in font data according to the first embodiment of the present invention.

First, a dot positioned in front of or at the head of font data is selected as a target pixel. Next, it is determined whether data of the target pixel are blank data or font data (print data).

When data of the target pixel are font data, a pattern matching process is applied, and bit map data of the font data corresponding to a window are obtained by setting the target pixel as the center. The bit map data obtained at this time are data of 27 dots (9 dots × 3 dots). Next, the obtained bit map data are compared with data of a predetermined pattern (reference pattern) by the pattern matching method. When both the data are matched with each other, the target pixel data are converted into small ink droplet dot data (small dot data).

When the data at the target pixel are not font data, the process goes to a next target pixel (before or behind the target pixel). Then, it is determined whether data of the next target pixel are end data, when the data of the next target pixel are not the end data, the process continues until data of a succeeding target pixel become the end data. When the data of the succeeding target pixel are the end data, the process ends.

When both the data are not matched with each other, the process goes to a next target pixel. Then, it is determined whether the data of the next target pixel are end data, when the data of the next target pixel are not the end data, the process continues until data of a succeeding next target pixel become the end data.

As described above, only when the data of the target pixel are the font data, the pattern matching process is executed, and when the data of the target pixel are the blank data, detection of a changing point by the pattern matching is not executed. Since time for the pattern matching is not needed for the blank data, the processing time can be reduced.

In the above process, one pixel can be handled as one byte data or one bit data. When the one pixel is the one byte data, 27 bytes are needed to express data of 27 dots; however, when the one pixel is the one bit data, only 4 bytes are needed (1 byte = 8 bits). Therefore, when the one pixel is the one bit data, the amount of data to be processed is small, the capacity of memory can be reduced, and the processing speed can be high.

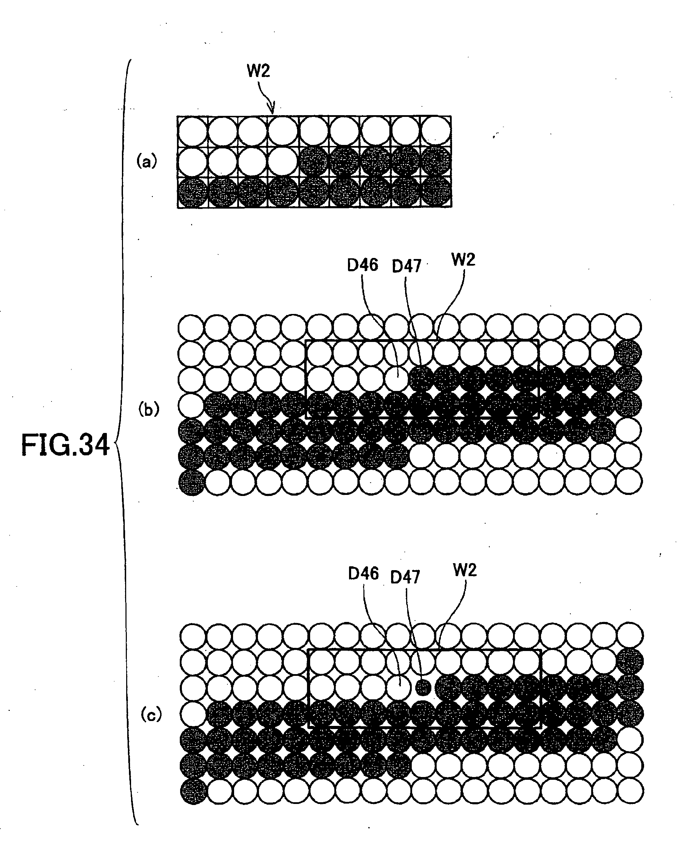

Next, referring to Fig. 34, the above process is explained in detail. Fig. 34 is a diagram showing an example of the small ink droplet dot data forming process shown in Fig. 33. When a dot D47 of font data shown in Fig. 34 (b) is selected as a target pixel by using a reference pattern W2 shown in Fig. 34 (a), since both the dot patterns are the same, as shown in Fig. 34 (c), data positioned at the target pixel D47 are converted from large font data into small font data. In this case, by using a window of 9 × 3 dots and the reference pattern of 9 × 3 dots, it is possible to determine whether four large dots showing font data adjacent to the changing point are converted into small dots.

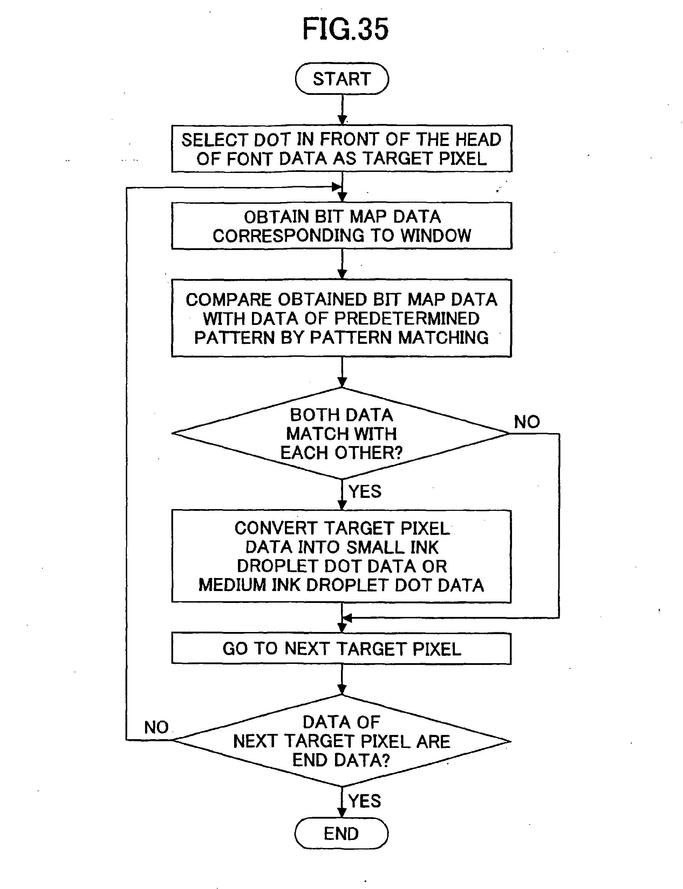

Next, referring to Fig. 35, jaggy correction according to a second embodiment of the present invention is explained. Fig. 35 is a flowchart showing a jaggy correction process according to the second embodiment of the present invention.

In the first embodiment of the present invention, there are two sizes of dots (a large ink droplet dot and a small ink droplet dot). However, in the second embodiment of the present invention, in addition to the above two dots, a medium ink droplet dot is used, that is, three kinds of dots (the large ink droplet dot, the small ink droplet dot, and the medium ink droplet dot) are used.

First, a dot positioned in front of the head of font data is selected as a target pixel. Then, a pattern matching process is applied, and bit map data of the font data corresponding to a window are obtained by setting the target pixel as the center. The bit map data obtained at this time are data of 27 dots (9 dots × 3 dots).

Next, the obtained bit map data are compared with data of a predetermined pattern (reference pattern) by the pattern matching method. When both the data are matched with each other, the target pixel data are converted into small ink droplet dot data or medium ink droplet dot data.

When both the data do not match with each other, the process goes to a next target pixel (before or behind the target pixel). Then, it is determined whether data of the next target pixel are end data, when the data of the next target pixel are not the end data, the process continues until data of a succeeding next target pixel become the end data. When the data of the succeeding next target pixel are the end data, the process ends.

In the above process, one pixel can be handled as one byte data or one bit data. When the one pixel is the one byte data, 27 bytes are needed to express data of 27 dots; however, when the one pixel is the one bit data, only 4 bytes are needed (1 byte = 8 bits). Therefore, when the one pixel is the one bit data, the amount of data to be processed is small, the capacity of memory can be reduced, and the processing speed can be high.

In this, in a case where the small dot data and the medium dot data are generated, when the original font data are expressed as 0 (blank) and 255 (print data) like the bit map data, or as 0 (blank) and 1 (print data) like binary data and when the font data are temporarily converted into 0 (blank) and 255 (print data), in the small dot data and the medium dot data, the blank data and data forming a font can be converted into data expressing small dots and the medium dots, for example, 85 and 170, respectively. In addition, when the small dot data and the medium dot data are processed as 0 and 1, additional memories whose size is the same as the size of the font data are installed (in this case, two memories for the small dot data and the medium dot data), the "1" showing that the print data are formed at a position where a small dot or a medium dot is formed. When a letter is printed by using font data which are composed of the small, medium, and large dot data formed by the pattern matching, or by using binary data for small dots (0,1), binary data for medium dots (0,1), and original binary font data, a slanting line in which jagginess is reduced can be realized (described below).

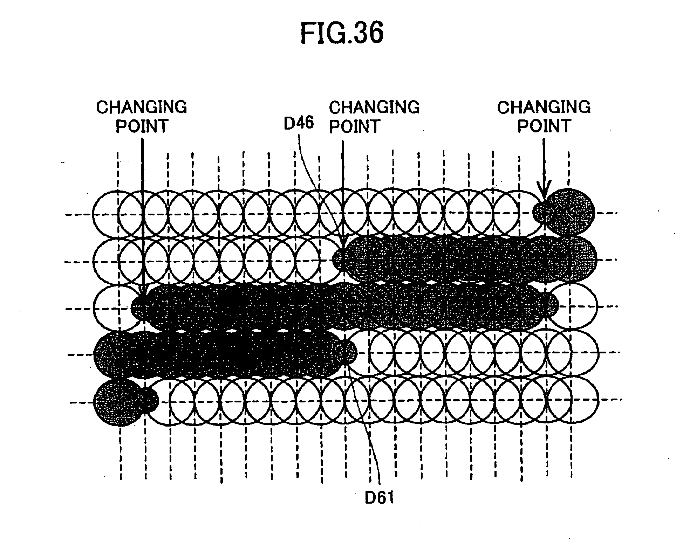

Next, referring to Figs. 36 through 43, examples of the jaggy correction according to the second embodiment of the present invention are explained in detail. In Figs. 36 through 43, a first example through an eighth example of the jaggy correction are shown, respectively. As described above, in Figs. 36 through 43, the pitch between adjacent two dots shown by the same interval is 600 dpi in the main scanning direction and 300 dpi in the sub scanning direction on an actual recording medium. In addition, a dot formed by a small ink droplet is called a small dot, and a dot formed by a medium ink droplet is called a medium dot, and the sizes of the small dot and the medium dot are smaller than the size of dots which form the step-shaped changing part.

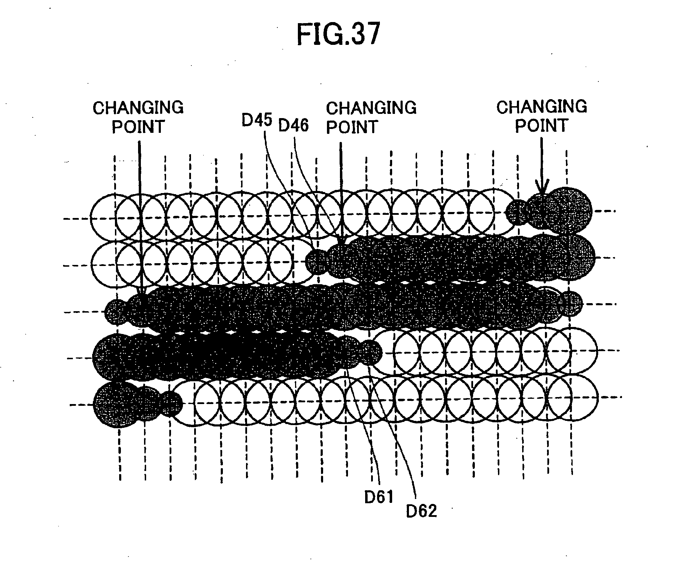

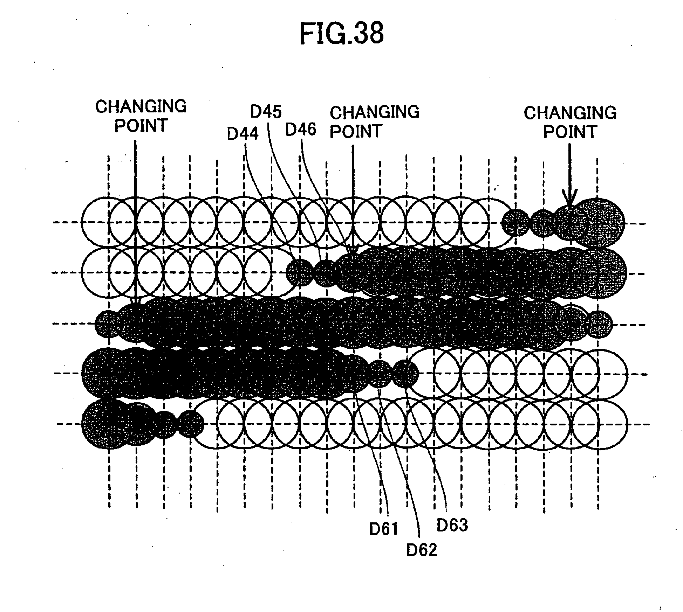

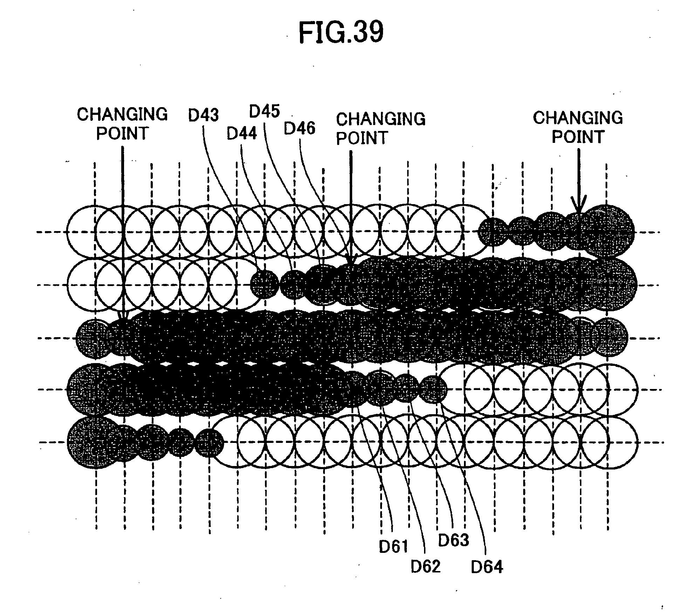

In Fig. 36, a small ink droplet dot is added to blank dots D46 and D61 at changing points of the step-shaped changing parts. In Fig. 37, a small ink droplet dot is added to blank dots D45 and D62 and a medium ink droplet dot is added to the blank dots D46 and D61 at and near the changing points of the step-shaped changing parts. In Fig. 38, a small ink droplet dot is added to blank dots D44, D45 and D62, D63, and a medium ink droplet dot is added to the blank dots D46 and D61 at and near the changing points of the step-shaped changing parts. In Fig. 39, a small ink droplet dot is added to blank dots D43, D44 and D63, D64 and a medium ink droplet dot is added to the blank dots D45, D46 and D61, D62 at and near the changing points of the step-shaped changing parts.

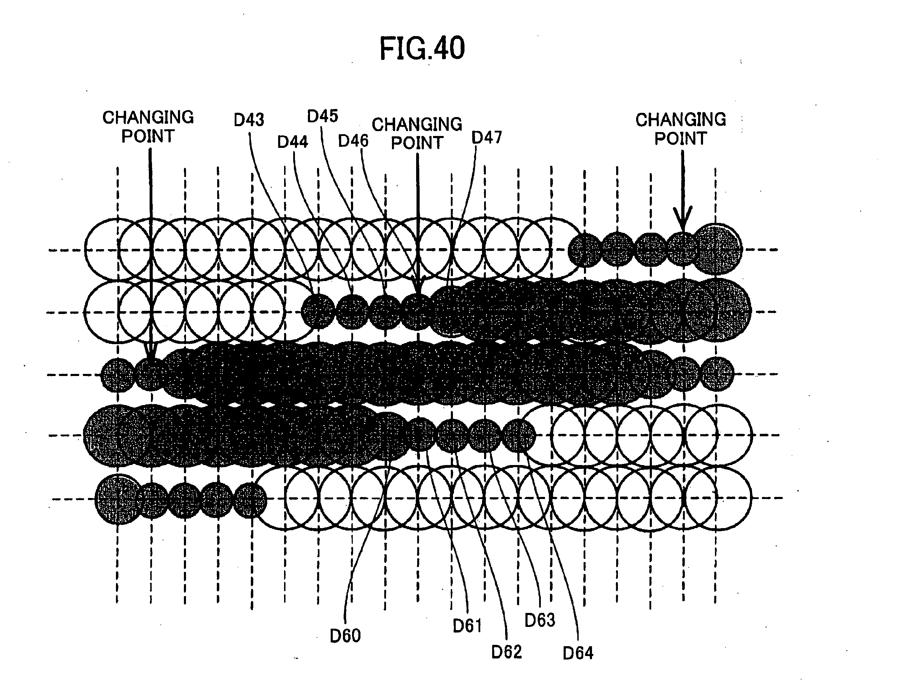

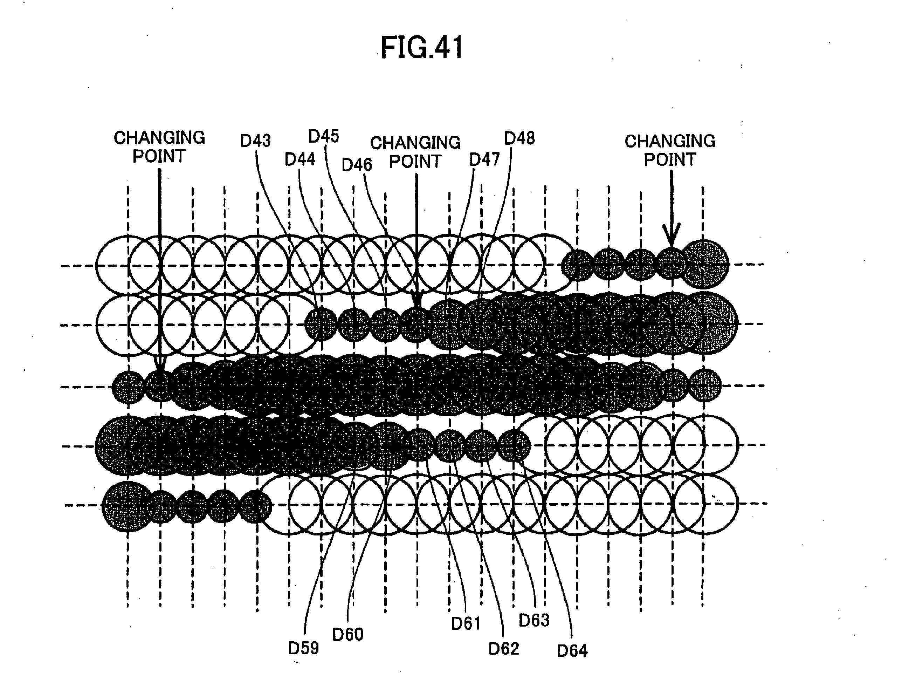

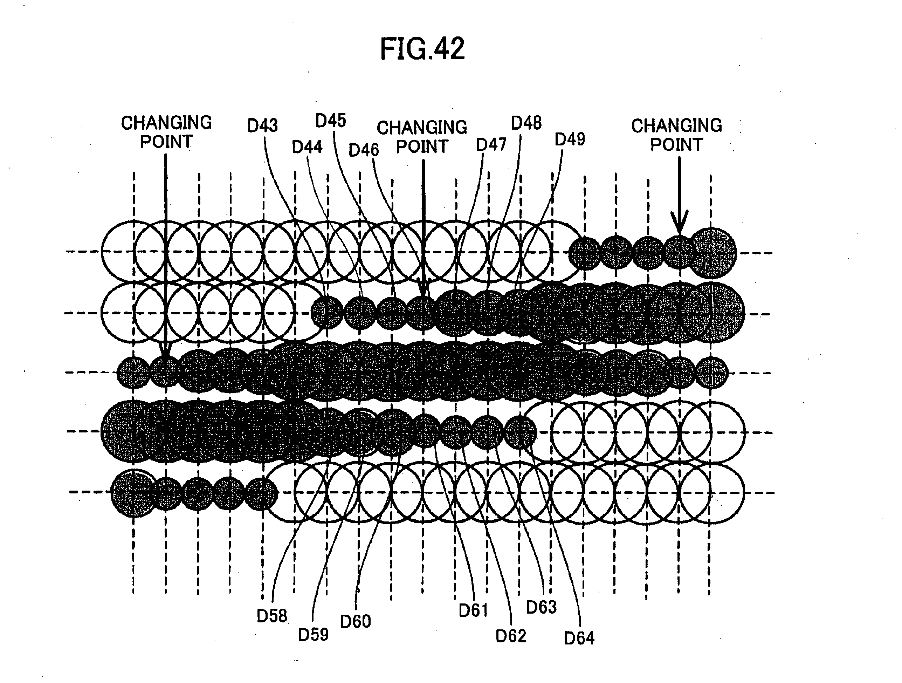

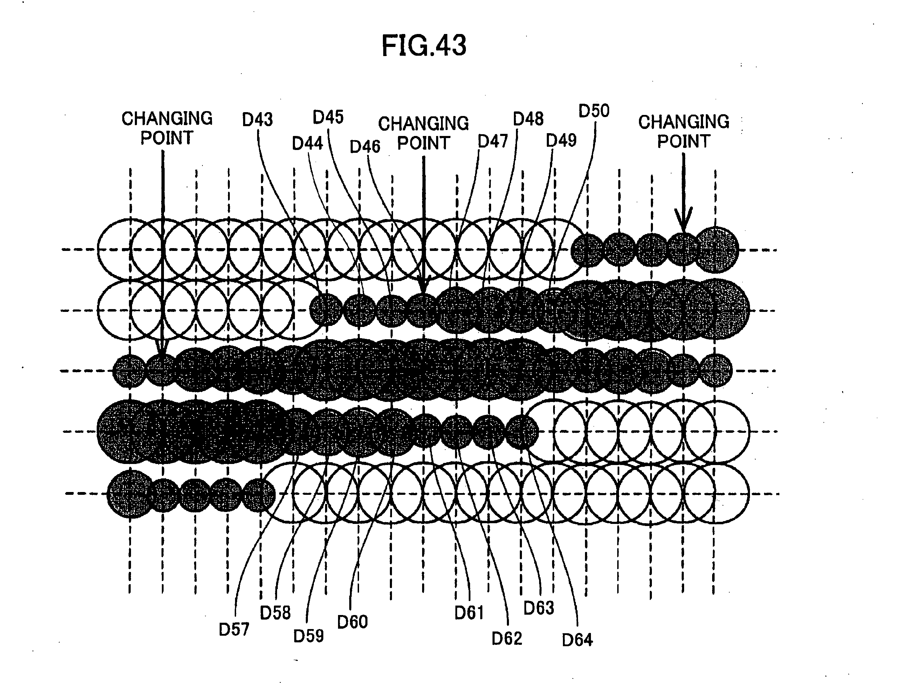

In addition, in Figs. 40 through 43, a small ink droplet dot is added to blank dots at and near the changing points of the step-shaped changing parts, and further image dots (font data dots) near the changing points of the step-shaped changing parts are converted into a small ink droplet dot or a medium ink droplet dot (in this case, a small ink droplet dot is not used for the font data dot). That is, in Fig. 40, a small ink droplet dot is added to blank dots D43, D44, D45, D46 and D61, D62, D63, D64, and font data dots D47 and D60 are converted into a medium ink droplet dot. In Fig. 41, a small ink droplet dot is added to blank dots D43, D44, D45, D46 and D61, D62, D63, D64, and font data dots D47, D48 and D59, D60 are converted into a medium ink droplet dot. In Fig. 42, a small ink droplet dot is added to blank dots D43, D44, D45, D46 and D61, D62, D63, D64, and font data dots D47, D48, D49 and D58, D59, D60 are converted into a medium ink droplet dot. In Fig. 43, a small ink droplet dot is added to blank dots D43, D44, D45, D46 and D61, D62, D63, D64, and font data dots D47, D48, D49, D50 and D57, D58, D59, D60 are converted into a medium ink droplet dot.

Observability of jagginess was evaluated by an experiment by forming letters of the above eight examples shown in Figs. 36 through 43. As a result of the experiment, it is understood that the following patterns are suitable. That is, patterns were suitable in which patterns four small ink droplet dots were added to blank dots at and near the changing points and two or more image dots (print data dots) were converted into a medium ink droplet dot. In other words, examples shown in Figs. 41 through 43 are suitable.

On the other hand, when the processing speed is studied in the eight examples shown in Figs 36 through 43, the processing speed of the example shown in Fig. 36 is fastest, and the processing speed becomes slower in order from the example shown in Fig. 36 to the example shown in Fig. 43.

The first reason is explained. In the examples shown in Figs. 36 through 39, the pattern matching is applied only to cases in which the target pixel is a blank dot. However, in the examples shown in Figs. 40 through 43, the pattern matching must be applied to cases in which the target pixels are blank dots and image dots (print data dots). In other words, when only a small ink droplet dot or a medium ink droplet dot is added to a blank dot, font data in which the jagginess is reduced can be formed at high speed.

The second reason is explained. The number of necessary reference patterns is smallest in the example shown in Fig. 36, and becomes larger in order from the example shown in Fig. 37 to the example shown in Fig. 43. In the example shown in Fig. 37, a reference pattern, which determines the need for a second blank dot, is required in addition to the reference pattern in the example shown in Fig. 36. In the example shown in Fig. 40, a reference pattern, which determines the need for a first font data dot, is required in addition to the reference patterns which determine the need for four blank dots. Further, in the example shown in Fig. 41, a reference pattern, which determines the need for a second font data dot, is required in addition to the reference patterns which are used in the example shown in Fig. 40. As described above, the number of reference patterns and the number of the pattern matching operations increase corresponding to the increase of the target pixels.

Next, specific examples are explained. Font data, in which small dots are added to blank dots and some font data dots are converted into medium dots (in this case, small dots are not used), are printed on normal paper by using an inkjet recording head under the following conditions, and the quality of the printed letter is evaluated.

The conditions:
Head; 384 nozzles/color
Nozzle pitch; 84 µm (corresponds to 300 dpi)
Image resolution; 600 dpi in the main scanning direction, and 300 dpi in the sub scanning direction (= nozzle pitch)
Dot size; 87µm (large dot), 60µm (medium dot), and 40µm (small dot)
Letters; MS Mincho (a type of letters), the sizes of fonts = 6, 10, 12, 20, 30, 50, and 80 point.
Jaggy correction methods; described in examples shown in Figs. 36 through 43
Printing method; the number of paths (the number of times of scanning to form a line) = 1, and non-interlaced
Paper; type 6200, a product of RICOH Co., Ltd.
Printed letters to which the jaggy correction is applied and is not applied are compared. In the printed letters to which the jaggy correction is applied, printed letters in which a small dot is added to blank dots and some font data dots are converted into a medium dot in the examples shown in Figs. 36 through 43 are used. In the printed letters to which the jaggy correction is not applied, printed letters in which a small dot is not added to blank dots are used, that is, printed letters formed by only large dots are used. The results of the comparison are shown in Table 1. In Table 1, a sign "××" shows that jagginess is noticeable and its letter quality is worst, a sign "×" shows that jagginess is noticeable and its letter quality is next-to-worst, a sign "Δ" shows that jagginess is slightly noticeable, a sign "○" shows that the jagginess is not noticeable and its letter quality is good, and a sign "⊚" shows that the jagginess is never noticeable and its letter quality is excellent.

**[Table 1]**

| JAGGY CORRECTION METHOD | LETTER SIZE | | | | | | |
|---|---|---|---|---|---|---|---|
| | 6 POINT | 10 POINT | 12 POINT | 20 POINT | 30 POINT | 50 POINT | 80 POINT |
| NON | ×× | ×× | ×× | × | × | Δ | Δ |
| SHOWN IN FIG. 36 | Δ | Δ | Δ | Δ | Δ | ○ | ○ |
| SHOWN IN FIG. 37 | ○ | ○ | ○ | ○ | ○ | ⊚ | ⊚ |
| SHOWN IN FIG. 38 | ○ | ○ | ○ | ⊚ | ⊚ | ⊚ | ⊚ |
| SHOWN IN FIG. 39 | ○ | ○ | ○ | ⊚ | ⊚ | ⊚ | ⊚ |
| SHOWN IN FIG. 40 | ○ | ⊚ | ⊚ | ⊚ | ⊚ | ⊚ | ⊚ |
| SHOWN IN FIG. 41 | ○ | ⊚ | ⊚ | ⊚ | ⊚ | ⊚ | ⊚ |
| SHOWN IN FIG. 42. | ○ | ⊚ | ⊚ | ⊚ | ⊚ | ⊚ | ⊚ |
| SHOWN IN FIG. 43 | ○ | ⊚ | ⊚ | ⊚ | ⊚ | ⊚ | ⊚ |

According to the results of the comparison, when the jaggy correction according to the second embodiment of the present invention is applied, the letter quality becomes excellent. In addition, a letter whose image concentration is high can be obtained without feathering.

Further, in order to compare ink, the jaggy correction is executed by changing ink from the pigment type ink to dye type ink; in this case, feathering largely occurs and roughness caused by the feathering becomes noticeable thereby weakening the effect of the jaggy correction.

From a viewpoint of the letter quality, when the jaggy correction methods in the present embodiment are compared, the letter quality is excellent in the examples shown in Figs. 43 through 40. The letter quality is degraded in order from the examples shown in Figs. 39 and 38 to the examples shown in Figs. 37 and 36. That is, when the jaggy correction is applied to both of the blank dots and the image dots (print data dots), the effect of the jaggy correction becomes excellent. Especially, in the examples shown in Figs. 42 and 43, letter quality almost equivalent to letter quality of 600 dpi × 600 dpi can be obtained. Even when the same reference patterns are used, since parts near the changing points can be formed by small dots and the medium dots, the level difference becomes smoother.

In addition, from Table 1, the letter quality of the larger font size (letter size) is better than that of the smaller font size. However, in the smaller size letter, the effect of the jaggy correction is obtained. Further, in any one of the methods shown in Figs. 36 through 43, a large effect can be obtained for any of the font sizes. Therefore, the present embodiment can be applied regardless of the font size.

However, from a viewpoint of the processing speed, when the font size becomes large, since the number of dots of which a font is composed becomes large, the processing speed becomes slow. Therefore, when the throughput is intended to be high by processing at higher speed, for example, when throughput which is over 20 PPM is realized, it is preferable that the present embodiment be applied to a letter whose font size is 50 points or less which is generally used, without applying the embodiment to a letter whose font size is large.

That is, when the changing points are detected only for letters whose font size is small, the processing time can be shortened. Especially, when the changing points are detected only for letters whose font size is 50 points or less, both improving the letter quality and making the processing speed higher can be realized.

In addition, the jaggy correction can be applied corresponding to a color of an image to be output by selecting a jaggy correction executing mode or a mode not executing jaggy correction. That is, the jaggy correction is applied to only letters of a color which color is used frequently in general documents. With this, when high throughput is required, a high PPM output can be realized without executing unnecessary processes. For example, in a case of a single color of yellow or magenta, since relative notice-ability by the sense of sight is weaker than cyan or black, the jaggy correction is not applied to letters of the single color of yellow or magenta. In detail, the contents described in Patent Document 6 can be applied.

In the present embodiment, examples in which a letter is printed on normal paper are explained. However, the present embodiment can be applied to a recording medium such as coated paper, glossy paper, and OHP film. In addition, it can be determined whether the jaggy correction according to the present embodiment is to be selected by the differences of the recording media.

In addition, in the present embodiment, examples in which a letter is printed by the resolution of 600 dpi × 300 dpi are explained. However, the present embodiment can be applied to a case of lower resolution of, for example, 400 dpi × 200 dpi, or 300 dpi × 150 dpi. In this case, the diameter of dots by which a letter is formed becomes large and the level difference at the step-shaped changing parts becomes noticeable. Therefore, when the present embodiment is applied to such a case, a larger effect can be obtained.

On the other hand, in a case of higher resolution, for example, 600 dpi × 600 dpi, 600 dpi × 1200 dpi, or 1200 dpi × 1200 dpi, the number of dots by which a letter is formed is large and the diameter of the dots is small. Therefore, the jagginess is not noticeable.

Therefore, in a case of an image forming apparatus providing plural printing modes for printing a letter by different resolutions, it is preferable to have two modes, that is, a mode in which the jaggy correction is executed and a mode in which the jaggy correction is not executed, and one of the modes is selected corresponding to the resolution. With this, the throughput can be increased. In this case, since the jagginess is hardly noticeable when the resolution is 600 dpi or more, as a guide line, when the resolution either in the main scanning direction or in the sub scanning direction is less than 600 dpi, the jaggy correction is executed.

Further, in the present embodiment, an example is explained in which the present embodiment is applied to a serial type image forming apparatus. However, in a case of a line type image forming apparatus, the resolution in the line direction (first direction: nozzle arraying direction of a recording head) is regulated by the nozzle pitch, and the resolution in the recording medium carrying direction (second direction) can be changed by changing the carrying amount of the recording medium. Therefore, in the case of the line type image forming apparatus, when the resolution in the second direction is higher than that in the first direction, the jaggy correction applied to a slanting line nearly parallel to the second direction and is not applied to a slanting line nearly parallel to the first direction. This is possible.

In addition, the font data having the jaggy correction applied are formed by a printer driver installed in a host computer (personal computer) such as an information processing apparatus including an image processing apparatus, from which image data are sent to an inkjet recording apparatus. Therefore, the printer driver is stored in a CD-ROM or a hard disk in a server on a network as software in which the jaggy correction method (dot data conversion method) is described. The personal computer can operate the software by downloading it from the server.

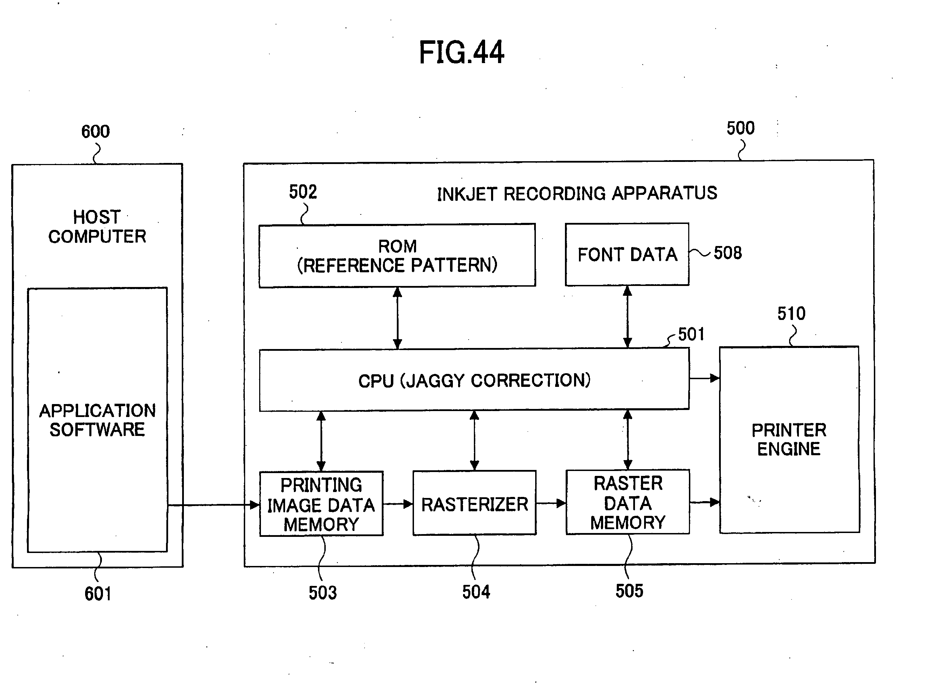

In the present embodiment, an example is explained in which a host computer executes the jaggy correction (dot data conversion). However, an image forming apparatus can execute the jaggy correction. Referring to Fig. 44, this case is explained. Fig. 44 is a block diagram showing an image forming apparatus in which the program (printer driver) of the jaggy correction process according to the embodiments of the present invention is installed. In this, the jaggy correction explained above is executed in the image forming apparatus.

In Fig. 44, an image forming apparatus (inkjet recording apparatus) 500 includes a CPU (main controller) 501 which controls all the elements in the apparatus. The CPU 501 provides a jaggy correction unit (dot data conversion unit), a detecting unit for detecting a step-shaped changing part, and a ROM 502 in which various programs, reference patterns for pattern matching in the jaggy correction, and so on are stored. The CPU 501 stores print data such as letter code data given from application software 601 of a host computer (PC) 600 in a printing image data memory 503.

The data stored in the printing image data memory 503 are interpreted by a rasterizer 504. When the inkjet recording apparatus 500 receives a command to print a line, the rasterized data are transformed into a print dot pattern corresponding to the designated position, boldness, and so on, and the print dot pattern is stored in the raster data memory 505. When the command is given to print a letter, the CPU 501 reads outline information of the letter from the font data 508 and the rasterizer 504 transforms the data into a print dot pattern (bit map data) corresponding to the designated position and size and stores the bit map data in the raster data memory 505.

At this time, the CPU 501 detects a step-shaped changing part of a slanting line of a letter in a line nearly parallel to the main scanning direction by using the bit map data. Then, the CPU 501 applies the jaggy correction to the step-shaped changing part by using reference patterns. That is, dots near the step-shaped changing part are converted into smaller dots corresponding to the slanting degree of the step-shaped changing part.

The print dot pattern (bit map data) stored in the raster data memory 505 is sent to a printer engine 510, and the print dot pattern is printed on a recording medium. At this time, the print dot pattern is scanned in the main and sub scanning directions while a pressure generating unit is driven by the printer driver 510.

In this, the detection of the step-shaped changing part and the conversion of dot data are executed by software (program). However, the above operations can be executed by only hardware such as an ASIC (application specific integrated circuit).

As described above, when the bit map expansion and the jaggy correction (dot data conversion process) are executed in the image forming apparatus, the bit map data are not included in data transfer from the host computer to the image forming apparatus. Consequently, the processing speed becomes high and the throughput increases.

Further, the present invention is not limited to these embodiments, but various variations and modifications may be made without departing from the scope of the present invention.

## Claims

1. An image processing method which converts recording dot pattern data to form image data to be output from an image forming apparatus, which apparatus forms an image composed of a plurality of dots by using droplets of recording liquid in different resolutions between a first direction and a second direction which second direction is orthogonal to the first direction, the method comprising the step of:
detecting in the pattern data one or more of the dots to be converted into a predetermined dot when said one or more of the dots are near a step-shaped changing part of dots of an outline part of the image by using an "m ^{x} n" dot window, in which a number of dots "m" corresponds to the resolution in the first direction and a number of dots "n" corresponds to the resolution in the second direction such that the number of dots in the higher resolution direction is larger than the number of dots in the lower resolution direction, and comparing the dots in the window to a predetermined pattern using a pattern matching method.

2. The image processing method as claimed in claim 1, wherein:
the detected dot to be converted is a dot of a blank part of the image and is converted into a small size dot.

3. The image processing method as claimed in claim 1, wherein:
the detected one or more dots to be converted are dots of blank parts of the image and are converted into a small size dot.

4. The image processing method as claimed in claim 1 wherein:
the detected dot to be converted is a dot of an print data of the image and is converted into a small size dot.

5. The image processing method as claimed in claim 1, wherein:
the detected one or more dots to be converted are dots of print data parts of the image and are converted into a small size dot.

6. The image processing method as claimed in claim 2, wherein:
the small size dot is selected from plural kinds of small size dots.

7. The image processing method as claimed in claim 1, wherein:
the detected one or more dots to be converted are converted into the predetermined dot corresponding to the slant of the outline part of the image.

8. The image processing method as claimed in claim 1, wherein:
the detected one or more dots to be converted are converted into the predetermined dot corresponding to a color of a dot of the image.

9. The image processing method as claimed in claim 1, wherein:
when the image is a letter image, one or more of the dots near the step-shaped changing part of the letter image are not converted into the predetermined dot depending on the font size of the letter image.

10. The image processing method as claimed in claim 1, wherein:
the one or more dots near the step-shaped changing part of the image are not converted into the predetermined dot depending on the resolution in the first direction and the resolution in the second direction.

11. An image forming apparatus which converts recording dot pattern data to form an image composed of a plurality of dots by using droplets of recording liquid in different resolutions between a first
direction and a second direction which second direction is orthogonal to the first direction, comprising:
a detecting unit that detects in the pattern data one or more of the dots to be converted into a predetermined dot when said one or more of the dots are near a step-shaped changing part of dots of an outline part of the image by using an "m ^{x} n" dot window, in which a number of dots "m" corresponds to the resolution in the first direction and a number of dots "n" corresponds to the resolution in the second direction such that the number of dots in the higher resolution direction is larger than the number of dots in lower resolution direction; and
means for comparing the dots in the window to a predetermined pattern using a pattern matching method.

12. The image forming apparatus as claimed in claim 11, wherein:
the detected dot to be converted is a dot of a blank part of the image and is converted into a small size dot.

13. The image forming apparatus as claimed in claim 11, wherein:
the detected one or more dots to be converted are dots of blank parts of the image and are converted into a small size dot.

14. The image forming apparatus as claimed in claim 11 wherein:
the detected dot to be converted is a dot of a print data part of the image and is converted into a small size dot.

15. The image forming apparatus as claimed in claim 11, wherein:
the detected one or more dots to be converted are dots of print data parts of the image and are converted into a small size dot.

16. The image forming apparatus as claimed in claim 11, wherein:
the detected one or more dots to be converted are converted into the predetermined dot corresponding to the slant of the outline part of the image.

17. The image forming apparatus as claimed in claim 11, wherein:
the detected one or more dots to be converted are converted into the predetermined dot corresponding to a color of a dot of the image.

18. The image forming apparatus as claimed in claim 11, wherein:
when the image is a letter image, one or more of the dots near the step-shaped changing part of the letter image are not converted into the predetermined dot depending on the font size of the letter image.

19. The image forming apparatus as claimed in claim 11, wherein:
the one or more dots near the step-shaped changing part of the image are not converted into the predetermined dot depending on the resolution in the first direction and the resolution in the second direction.

20. A program which causes a computer to execute the image processing method as claimed in claim 1.

## Patentansprüche

1. Bildverarbeitungsverfahren, das Aufzeichnungspunktmusterdaten umsetzt, um von einer Bilderzeugungsvorrichtung auszugebende Bilddaten zu erzeugen, wobei die Vorrichtung ein aus mehreren Punkten bestehendes Bild unter Verwendung von Tröpfchen einer Aufzeichnungsflüssigkeit in verschiedenen Auflösungen zwischen einer ersten Richtung und einer zweiten Richtung, wobei die zweite Richtung senkrecht zu der ersten Richtung ist, erzeugt, wobei das Verfahren die Schritte umfasst:
Detektieren eines oder mehrerer Punkte in den Musterdaten, die in einen vorgegebenen Punkt umzusetzen sind, wenn der eine oder die mehreren Punkte in der Nähe eines stufenförmigen Änderungsteils von Punkten eines Umrissteils des Bildes sind, unter Verwendung eines "m × n"-Punktfensters, in dem eine Anzahl von Punkten "m" der Auflösung in der ersten Richtung entspricht und eine Anzahl von Punkten "n" der Auflösung in der zweiten Richtung entspricht, so dass die Anzahl der Punkte in der Richtung mit der höheren Auflösung größer als die Anzahl der Punkte in der Richtung mit der geringeren Auflösung ist, und Vergleichen der Punkte in dem Fenster mit einem vorgegebenen Muster unter Verwendung eines Musterabgleichverfahrens.

2. Bildverarbeitungsverfahren nach Anspruch 1, wobei:
der detektierte umzusetzende Punkt ein Punkt eines leeren Teils des Bildes ist und in einen Punkt von geringer Größe umgesetzt wird.

3. Bildverarbeitungsverfahren nach Anspruch 1, wobei:
der eine oder die mehreren detektierten umzusetzenden Punkte Punkte in leeren Teilen des Bildes sind und in Punkte von geringer Größe umgesetzt werden.

4. Bildverarbeitungsverfahren nach Anspruch 1, wobei:
der detektierte umzusetzende Punkt ein Punkt von Druckdaten des Bildes ist und in einen Punkt von geringer Größe umgesetzt wird.

5. Bildverarbeitungsverfahren nach Anspruch 1, wobei:
der eine oder die mehreren detektierten umzusetzenden Punkte Punkte von Druckdatenteilen des Bildes sind und in einen Punkt von geringer Größe umgesetzt werden.

6. Bildverarbeitungsverfahren nach Anspruch 2, wobei:
der Punkt von geringer Größe aus mehreren Arten von Punkten mit geringer Größe ausgewählt ist.

7. Bildverarbeitungsverfahren nach Anspruch 1, wobei:
der eine oder die mehreren detektierten umzusetzenden Punkte entsprechend der Diagonalen des Umrissteils des Bildes in einen vorgegebenen Punkt umgesetzt werden.

8. Bildverarbeitungsverfahren nach Anspruch 1, wobei:
der eine oder die mehreren detektierten umzusetzenden Punkte entsprechend einer Farbe eines Punktes des Bildes in den vorgegebenen Punkt umgesetzt werden.

9. Bildverarbeitungsverfahren nach Anspruch 1, wobei:
dann, wenn das Bild ein Buchstabenbild ist, einer oder mehrere Punkte in der Nähe des stufenförmigen Änderungsteils des Buchstabenbildes abhängig vom Schriftgrad des Buchstabenbildes nicht in den vorgegebenen Punkt umgesetzt werden.

10. Bildverarbeitungsverfahren nach Anspruch 1, wobei:
der eine oder mehrere Punkte in der Nähe des stufenförmigen Änderungsteils des Bildes abhängig von der Auflösung in der ersten Richtung und der Auflösung in der zweiten Richtung nicht in den vorgegebenen Punkt umgesetzt werden.

11. Bilderzeugungsvorrichtung, die Aufzeichnungspunktmusterdaten umsetzt, um ein aus mehreren Punkten bestehendes Bild unter Verwendung von Tröpfchen einer Aufzeichnungsflüssigkeit in verschiedenen Auflösungen zwischen einer ersten Richtung und einer zweiten Richtung, wobei die zweite Richtung senkrecht zu der ersten Richtung ist, zu erzeugen, die umfasst:
eine Detektionseinheit, die in den Musterdaten einen oder mehrere Punkte, die in einen vorgegebenen Punkt umzusetzen sind, wenn der eine oder die mehreren Punkte in der Nähe eines stufenförmigen Änderungsteils von Punkten eines Umrissteils des Bildes sind, unter Verwendung eines "m x n"-Punktfensters, in dem eine Anzahl von Punkten "m" der Auflösung in der ersten Richtung entspricht und eine Anzahl von Punkten "n" der Auflösung in der zweiten Richtung entspricht, so dass die Anzahl der Punkte in der Richtung mit der höheren Auflösung größer als die Anzahl der Punkte in der Richtung mit der geringeren Auflösung ist, detektiert, und
Mittel zum Vergleichen der Punkte in dem Fenster mit einem vorgegebenen Muster unter Verwendung eines Musterabgleichverfahrens.

12. Bilderzeugungsvorrichtung nach Anspruch 11, wobei:
der detektierte umzusetzende Punkt ein Punkt eines leeren Teils des Bildes ist und in einen Punkt von geringer Größe umgesetzt wird.

13. Bildverarbeitungsvorrichtung nach Anspruch 11, wobei:
der eine oder die mehreren detektierten umzusetzenden Punkte Punkte in leeren Teilen des Bildes sind und in Punkte von geringer Größe umgesetzt werden.

14. Bildverarbeitungsvorrichtung nach Anspruch 11, wobei:
der detektierte umzusetzende Punkt ein Punkt von einem Druckdatenteil des Bildes ist und in einen Punkt von geringer Größe umgesetzt wird.

15. Bildverarbeitungsvorrichtung nach Anspruch 11, wobei:
der eine oder die mehreren detektierten umzusetzenden Punkte Punkte von Druckdatenteilen des Bildes sind und in einen Punkt von geringer Größe umgesetzt werden.

16. Bildverarbeitungsvorrichtung nach Anspruch 11, wobei:
der eine oder die mehreren detektierten umzusetzenden Punkte entsprechend der Diagonalen des Umrissteils des Bildes in einen vorgegebenen Punkt umgesetzt werden.

17. Bildverarbeitungsvorrichtung nach Anspruch 11, wobei:
der eine oder die mehreren detektierten umzusetzenden Punkte entsprechend einer Farbe eines Punktes des Bildes in den vorgegebenen Punkt umgesetzt werden.

18. Bildverarbeitungsvorrichtung nach Anspruch 11, wobei:
dann, wenn das Bild ein Buchstabenbild ist, einer oder mehrere Punkte in der Nähe des stufenförmigen Änderungsteils des Buchstabenbildes abhängig vom Schriftgrad des Buchstabenbildes nicht in den vorgegebenen Punkt umgesetzt werden.

19. Bildverarbeitungsvorrichtung nach Anspruch 11, wobei:
der eine oder die mehreren Punkte in der Nähe des stufenförmigen Änderungsteils des Bildes abhängig von der Auflösung in der ersten Richtung und der Auflösung in der zweiten Richtung nicht in den vorgegebenen Punkt umgesetzt werden.

20. Programm, das bewirkt, dass ein Computer das Bildverarbeitungsverfahren nach Anspruch 1 ausführt.

## Revendications

1. Procédé de traitement d'image qui convertit des données de motif de points d'enregistrement pour former des données d'image devant être sorties d'un appareil de formation d'image, lequel appareil forme une image composée d'une pluralité de points en utilisant des gouttelettes de liquide d'enregistrement à des résolutions différentes entre une première direction et une seconde direction, laquelle seconde direction est orthogonale à la première direction, le procédé comprenant l'étape consistant à :
détecter dans les données de motif un ou plusieurs des points devant être convertis en un point prédéterminé lorsque lesdits un ou plusieurs des points sont près de la partie changeant en forme de marche de points d'une partie de contour de l'image en utilisant une fenêtre de points « m x n », dans laquelle un nombre de points « m » correspond à la résolution dans la première direction et un nombre de points « n » correspond à la résolution dans la seconde direction de sorte que le nombre de points dans la direction de résolution supérieure soit plus grand que le nombre de points dans la direction de résolution inférieure, et comparer les points dans la fenêtre à un motif prédéterminé en utilisant un procédé d'appariement de formes.

2. Procédé de traitement d'image selon la revendication 1, dans lequel :
le point détecté devant être converti est un point d'une partie blanche de l'image et est converti en un point de petite taille.

3. Procédé de traitement d'image selon la revendication 1, dans lequel :
les un ou plusieurs points détectés devant être convertis sont des points de parties blanches de l'image et sont converties en un point de petite taille.

4. Procédé de traitement d'image selon la revendication 1, dans lequel :
le point détecté devant être converti est un point d'une partie de données d'impression de l'image et est converti en un point de petite taille.

5. Procédé de traitement d'image selon la revendication 1, dans lequel :
les un ou plusieurs points détectés devant être convertis sont des points de parties de données d'impression de l'image et sont convertis en un point de petite taille.

6. Procédé de traitement d'image selon la revendication 2, dans lequel :
le point de petite taille est sélectionné parmi une pluralité de types de points de petite taille.

7. Procédé de traitement d'image selon la revendication 1, dans lequel :
les un ou plusieurs points détectés devant être convertis sont convertis en le point prédéterminé correspondant à l'inclinaison de la partie de contour de l'image.

8. Procédé de traitement d'image selon la revendication 1, dans lequel :
les un ou plusieurs points détectés devant être convertis sont convertis en le point prédéterminé correspondant à une couleur d'un point de l'image.

9. Procédé de traitement d'image selon la revendication 1, dans lequel :
lorsque l'image est une image de lettre, un ou plusieurs des points près de la partie changeant en forme de marche de l'image de lettre ne sont pas convertis en le point prédéterminé en fonction de la taille de la police de l'image de lettre.

10. Procédé de traitement d'image selon la revendication 1, dans lequel :
les un ou plusieurs points près de la partie changeant en forme de marche de l'image ne sont pas convertis en le point prédéterminé en fonction de la résolution dans la première direction et de la résolution dans la seconde direction.

11. Appareil de formation d'image qui convertit des données de motif de points d'enregistrement pour former une image composée d'une pluralité de points en utilisant des gouttelettes de liquide d'enregistrement à des résolutions différentes entre une première direction et une seconde direction, laquelle seconde direction est orthogonale à la première direction, comprenant :
une unité de détection qui détecte dans les données de motif un ou plusieurs des points devant être convertis en un point prédéterminé lorsque lesdits un ou plusieurs des points sont près d'une partie changeant en forme de marche de points d'une partie de contour de l'image en utilisant une fenêtre de points « m x n », dans laquelle un nombre de points « m » correspond à la résolution dans la première direction et un nombre de points « n » correspond à la résolution dans la seconde direction de sorte que le nombre de points dans la direction de résolution supérieure soit plus grand que le nombre de points dans la direction de résolution inférieure ; et
des moyens pour comparer les points dans la fenêtre à un motif prédéterminé en utilisant un procédé d'appariement de formes.

12. Appareil de formation d'image selon la revendication 11, dans lequel :
le point détecté devant être converti est un point d'une partie blanche de l'image et est converti en un point de petite taille.

13. Appareil de formation d'image selon la revendication 11, dans lequel :
les un ou plusieurs points détectés devant être convertis sont des points de parties blanches de l'image et sont converties en un point de petite taille.

14. Appareil de formation d'image selon la revendication 11, dans lequel :
le point détecté devant être converti est un point d'une partie de données d'impression de l'image et est converti en un point de petite taille.

15. Appareil de formation d'image selon la revendication 11, dans lequel :
les un ou plusieurs points détectés devant être convertis sont des points de parties de données d'impression de l'image et sont convertis en un point de petite taille.

16. Appareil de formation d'image selon la revendication 11, dans lequel :
les un ou plusieurs points détectés devant être convertis sont convertis en le point prédéterminé correspondant à l'inclinaison de la partie de contour de l'image.

17. Appareil de formation d'image selon la revendication 11, dans lequel :
les un ou plusieurs points détectés devant être convertis sont convertis en le point prédéterminé correspondant à une couleur d'un point de l'image.

18. Appareil de formation d'image selon la revendication 11, dans lequel :
lorsque l'image est une image de lettre, un ou plusieurs des points près de la partie changeant en forme de marche de l'image de lettre ne sont pas convertis en le point prédéterminé en fonction de la taille de la police de l'image de lettre.

19. Appareil de formation d'image selon la revendication 11, dans lequel :
les un ou plusieurs points près de la partie changeant en forme de marche de l'image ne sont pas convertis en le point prédéterminé en fonction de la résolution dans la première direction et de la résolution dans la seconde direction.

20. Programme qui amène un ordinateur à exécuter le procédé de traitement d'image selon la revendication 1.
